# EUROPEAN PATENT APPLICATION

(11) **EP 2 940 638 A1**
(43) Date of publication of application: **04.11.2015**
(21) Application number: 14290122.2
(22) Date of filing: 28.04.2014
(51) Int. Cl.: G06Q 20/22, G06Q 10/02, G06Q 20/40, G06Q 50/14

(54) **Travel reservation payment solution**

(71) Applicant: Amadeus S.A.S., 06410 Biot (FR)
(72) Inventor: Durmann, Patrick, Cambridge, MA 02140 (US); Jacob, Sylvain, 06600 Antibes (FR); Thomas, Neville, 06560 Valbonne (FR); Loppin, Emmanuel, 94130 Nogent sur Marne (FR)
(74) Representative: Samson & Partner Patentanwälte mbB

(57) **Abstract**

Methods, systems, and computer program products for generating a payment solution. A request to generate a payment solution for a priced travel solution comprising at least one travel inventory item using a plurality of forms of payment may be received. Responsive to receiving the request, a payment amount may be allocated to each of the plurality of forms of payment based at least in part on a payment hierarchy that defines an order in which the plurality of forms of payment are to be used for payment of the priced travel solution and at least one payment constraint associated with at least one of the plurality of forms of payment. The payment solution may be generated based on the allocated payment amounts.

## Description

### BACKGROUND

The invention is generally related to computers and computer software, and in particular to methods, systems, and computer program products for travel planning and reservations.

Computer technology is increasingly used in the travel industry to manage, support, book/reserve, and process payments for travel reservations as well as data associated therewith. In particular, third party reservation agents, such as travel agents, and/or customers (e.g., travelers) often utilize computer based devices/terminals to interface with a travel reservation system, such as a Global Distribution System (GDS), to book travel arrangements and/or travel-related services for the customer. When reserving travel-related services using such devices/terminals in communication with the travel reservation systems, a travel agent and/or customer may initiate a reservation session between a client device and the travel reservation system to book one or more travel inventory items corresponding to the travel-related services offered by one or more travel merchants (e.g., flights, hotels, rail transportation, dining reservations, etc.) for the customer during the reservation session.

Because computer technology is increasingly used to manage, support, book/reserve, and process payments for travel reservations, a continuing need exists in the art for improved computer-based travel reservation systems, as well as improved methods and computer program products, for facilitating travel-related service booking and payment.

### SUMMARY

Embodiments of the invention generally comprise methods, systems, and computer program products for generating a payment solution. A request to generate a payment solution for a priced travel solution comprising at least one travel inventory item using a plurality of forms of payment may be received. Responsive to receiving the request, a payment amount may be allocated to each of the plurality of forms of payment based at least in part on a payment hierarchy that defines an order in which the plurality of forms of payment are to be used for payment of the priced travel solution and at least one payment constraint that is associated with at least one of the plurality of forms of payment. The payment solution is generated based on the allocated payment amounts.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more reservation systems, one or more inventory systems, systems of one or more financial institutions, and one or more client devices consistent with embodiments of the invention.
FIG. 2 is an example block diagram of a reservation system of FIG. 1.
FIG. 3 is an exampleflowchart illustrating a sequence of operations that may be performed by the reservationsystem of FIG. 2 to generate a payment solution consistent with embodiments of the invention.
FIG. 4 is an exampleflowchart illustrating a sequence of operations that may be performed by the reservationsystem of FIG. 2 to allocate payment amounts to a plurality of forms of payment consistent with embodiments of the invention.
FIG. 5 is an exampleflowchart illustrating a sequence of operations that may be performed by the reservationsystem of FIG. 2 to allocate payment amounts to a plurality of forms of payment consistent with embodiments of the invention.
FIG. 6 is an exampleflowchart illustrating a sequence of operations that may be performed by the reservationsystem of FIG. 2 to update a payment solution in response to receiving an additional form of payment.
FIGS. 7A-C provide example flowcharts that illustrate sequences of operations that may be performed by the systems of FIG. 1 to generate and process a payment solution for a priced travel solution.
FIGS. 8A-H provide an example that illustrates allocating payment amounts among a plurality of forms of payment and generating of a payment solution based thereon to pay for a priced travel solution.
FIGS. 9A-H provide an example that illustrates allocating payment amounts among a plurality of forms of payment and generating of a payment solution based thereon to pay for a priced travel solution.
FIGS. 10A-F provide an example that illustrates optimizing a candidate allocation of payment amounts and generating a payment solution based thereon to pay for a priced travel solution.
FIGS. 11-16 are diagrammatic views of example graphical user interfaces that may be output on a display of a client device to interface with a reservation system to review and confirm a priced travel solution, input form of payment information, and review and confirm a payment solution.

### DETAILED DESCRIPTION

Embodiments of the invention provide systems, methods, and computer program products for generating a payment solution for a priced travel solution. A request to generate the payment solution for the priced travel solution using one or more forms of payment may be received. In general, the priced travel solution may comprise one or more travel inventory items that a user desires to pay for such that the travel inventory items may be reserved/ticketed. Consistent with embodiments of the invention, the payment solution may include an allocation of payment amounts among the plurality of forms of payment. A form of payment may generally refer to any voucher, credit, and/or account that may be accepted for payment, including for example, a refund voucher, a promotional voucher, a compensation voucher, a gift card, cash, a credit/debit card account, a negotiable instrument (e.g., a personal check), a third party payment processing account (e.g., PayPal), etc. Generally, some types of forms of payment may have fixed credit balances, i.e., an assigned value. For example, a gift card may have a fixed credit balance of $100, a refund voucher may have a fixed credit balance of $25, etc.

In general, the allocation of payment amounts to each form of payment may be based at least in part on a payment hierarchy that defines an order in which the forms of payment are to be used for payment of the priced travel solution. Furthermore, the allocation of payment amounts to each form of payment may be based at least in part on one or more payment constraints associated with one or more of the forms of payment.

Payment constraints generally constrain the application of particular types of forms of payment. Examples of payment constraints include, for example: a payment constraint that prohibits using two or more types of forms of payment in combination to pay for one travel inventory item; a payment constraint that constrains use of a type of form of payment to pay for a type of cost, such as surcharges or taxes; a payment constraint that identifies an expiration date and/or valid date range for a type of form of payment; a payment constraint that identifies one or more types of travel inventory item upon which a form of payment may be used or not used; a payment constraint that limits the number of different forms of payment that may be used to pay for a travel inventory item or a priced travel solution; and/or similar travel industry defined, travel provider defined, and/or traveler defined limitations relevant to the use of forms of payment when paying for a travel solution.

Payment constraints may generally be categorized as: constraints associated with the travel industry (e.g., a maximum of three forms of payment may be used to purchase a travel inventory item, etc.); constraints associated with a travel item (e.g., exchange document requires the presence of the original form(s) of payment, travel items priced in miles or points require the presence of dedicated form(s) of payment, etc.); constraints associated with a travel merchant (e.g., a form of payment may not be used for a given point of sale, a form of payment must be used in combination with another form of payment, etc.); and/or constraints associated with a form of payment (e.g., a form of payment may not be used to pay taxes, a form of payment is nominative, a form of payment has flight by and/or book by rules, a form of payment may not be used to pay for a specific travel inventory item, etc.). In general, some payment constraints may constrain a form of payment from being used to pay for one or more types of cost. A type of cost may generally correspond to a tax and/or surcharge, a fare (e.g., flight ticket), an additional service charge (e.g., extra bag fee). For example, a payment constraint may constrain a gift card from being used to pay for any tax/surcharge types of cost.

A payment hierarchy generally identifies an order in which forms of payment should be used/applied when allocating payment amounts to a plurality of forms of payment for a priced travel solution. The payment hierarchy may be travel provider defined and/or user defined. For example, a travel provider may provide a payment hierarchy that specifies that a balance of a refund voucher should be completely used before a payment amount is allocated to a credit card - i.e., the refund voucher may have a higher or superior priority than the credit card. Similarly, a user (e.g., a travel agent or a traveler/customer) may provide a payment hierarchy that specifies that a balance of a gift card should be completely used before a payment amount is allocated to a credit card. Furthermore, the order of forms of payment defined by the payment hierarchy may be based at least in part on one or more characteristics of various forms of payment. For example, a payment hierarchy may define promotional vouchers having an expiration date as having a higher priority than other forms of payment.

In general, a travel inventory item refers to a unit associated with a travel product that may be booked for a traveler. A travel inventory item for a travel product includes for example, a ticket for transportation (e.g., a ticket for a flight, a ticket for rail travel, etc.), an accommodation reservation (e.g., a hotel room, etc.), a vehicle rental, checking an extra bag for a flight, a valet service, a taxi service, etc. Each travel inventory item of the travel solution may have a cost that is based on a base amount (e.g., a fare or service charge) and any additional surcharge or tax amounts. In turn, the travel solution may have a total cost that is an aggregate amount of the cost of each travel inventory item.To pay for the priced travel solution, one or more forms of payment may be provided by a user (e.g., a travel agent or a traveler). Consistent with embodiments of the invention, payment amounts corresponding the cost of each travel inventory item of the travel solution may be allocated to each form of payment according to one or more payment constraints and/or a payment hierarchy.

Therefore, based on one or more payment constraints and a payment hierarchy, embodiments of the invention allocate payment amounts for the one or more travel inventory items of a priced travel solution to one or more forms of payment provided by a user, and a payment solution based on the allocated payment amounts is returned to the user for review and confirmation. In general, the payment solution may indicate each travel inventory item of the priced travel solution and the payment amount allocated to each form of payment to thereby pay for the travel inventory items. Consistent with embodiments of the invention, the payment solution for a priced travel solution may therefore be determined dynamically. By dynamically determining a payment solution for a priced travel solution, embodiments of the invention may promote use of one or more forms of payment that may optimize a travel provider's revenues. Similarly, travel providers may offer innovative forms of payment that may be processed consistent with embodiments of the invention. Furthermore, in some embodiments of the invention, a travel provider may define revenue management rules that provide additional processing fees for types of forms of payment. Moreover, embodiments of the invention may improve end-user experience when paying for priced travel solutions.

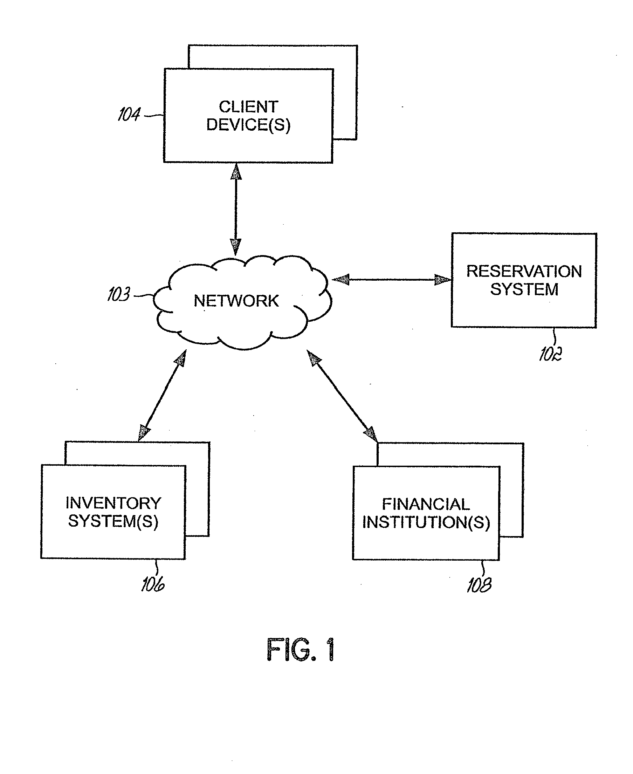

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A client device 104 may be connected to the communication network 103, such that a user, such as a customer or reservation agent (e.g., travel agency or other such travel reservation service), may initialize a travel planning and reservation session with the reservation system 102 to communicate a travel request and/or other such relevant data to the reservation system 102. The client device 104 may be a personal computing device, tablet computer, thin client terminal, smart phone and/or other such computing device. Moreover, during the travel planning and reservation session, forms of payment information may be communicated to the reservation system from the client device 104, and a payment solution based on the forms of payment and travel inventory items that the user wishes reserve may be communicated to the client device for approval.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a user (e.g., a reservation agent or a customer/traveler) may interface with the reservation system 102 using the client device 104 in a travel planning and reservation session to provide data for a travel request and one or more forms of payment. In turn, the reservation system 102 may interface with each inventory system 106 of each travel merchant that provides a travel inventory item that generally requires an availability determination (e.g., a flight, rail ticket, hotel room, event ticket, etc.) to determine availability and pricing for each travel inventory item requiring an availability determination for the booking request. In addition, consistent with some embodiments of the invention, some inventory systems 106 may manage booking of services that do not require an availability determination, such as a restaurant reservation, a taxi service, a non-limited availability event/location admission ticket, etc.Moreover, while the reservation system 102 and inventory system 106 are described herein as separate entities, the invention is not so limited. In some embodiments, various hardware, software components, and/or sequences of operations described with respect to the reservation system 102 or inventory system 106 may be implemented on either the reservation system 102 and/or inventory system 106. Furthermore, as will be appreciated, in some embodiments the reservation system 102 and inventory system 106 may be components of a GDS.

One or more servers for one or more financial institutions 108 (e.g., a bank, a credit card company, a payment processing company, etc.) may be connected to the network 103 and configured to interface with the reservation system 102. In general, after user approval of a payment solution at the client device 104, the reservation system 102 may interface with one or more financial institutions 108 corresponding to the forms of payment of the payment solution. Consistent with embodiments of the invention, for each form of payment of the payment solution, the reservation system may interface with a corresponding financial institution 108 to collect/reserve a payment amount allocated to the form of payment as indicated in the payment solution.

As will be described in detail below, consistent with embodiments of the invention, an interface may be generated by the reservation system such that a user (e.g., a traveler or a travel agent) may input information that may be utilized to generate a travel request that may in turn be used to determine one or more travel solutions consistent with embodiments of the invention. Furthermore, the user may input form of payment information via the interface presented on the client device 104. In general, such interface may be accessible via a client device 104, such as a personal computer, a portable electronic device (e.g., a smart phone, a tablet, a laptop, etc.), or a terminal configured to interface with a server providing such interface. In some embodiments, the interface may be a web-based interface provided by the reservation system 102 such that a user may navigate to the web-based interface with an Internet browser executing on the client device 104, and the web-based interface may cause a graphical user interface to be output at the client device 104 such that the user may interface with the reservation system 102 via the graphical user interface. In some embodiments, a client device 104 may include a dedicated interface application that is configured upon execution to output a graphical user interface at the client device 104 such that the user may interface with the reservation system via the graphical user interface. Consistent with these embodiments, a user may input form of payment information, including for example, a payment account number (e.g., a bank account or a credit/debit card number), identification information for a gift card, a promotional voucher, a refund voucher, a compensation voucher, and/or other such types of data that may identify a form of payment.

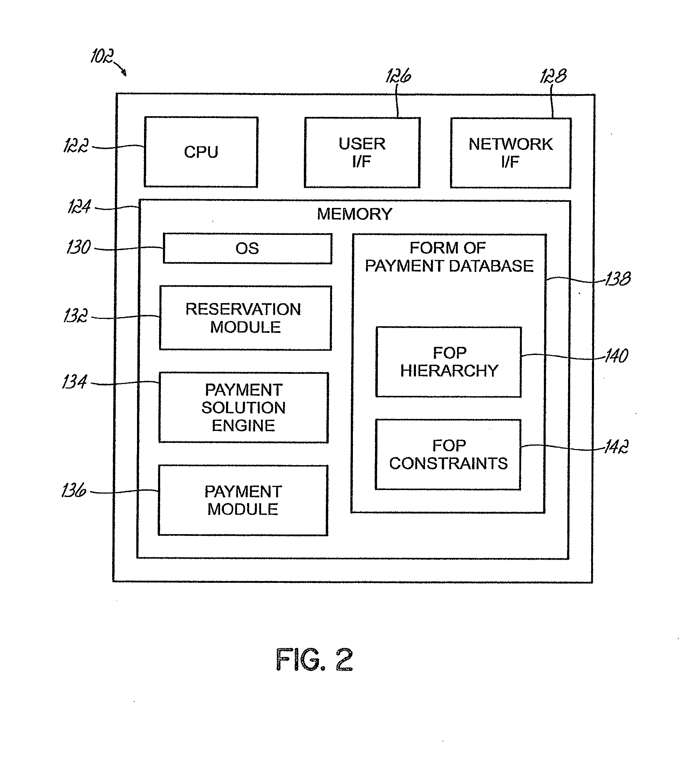

FIG. 2 provides a block diagram that illustrates the components of the one or more servers of the reservation system 102. The reservation system 102 includes at least one processor 122 including at least one hardware-based microprocessor and a memory 124 coupled to the at least one processor 122. The memory 124 may represent the random access memory (RAM) devices comprising the main storage of the reservation system 102, as well as any supplemental levels of memory, e.g., cache memories, non-volatile or backup memories (e.g., programmable or flash memories), read-only memories, etc. In addition, memory 124 may be considered to include memory storage physically located elsewhere in the travel and reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 126 incorporating one or more user input/output devices, e.g., a keyboard, a pointing device, a display, a printer, etc. Otherwise, data may be communicatedto and from another computer or terminal (e.g., the client device 104, the inventory system 106) over a network interface 128 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 130 and executes or otherwise relies upon various computer software applications, components, programs, objects, modules, engines, data structures, etc., including for example, a reservation module 132,a payment solutionengine 134, and a payment module 136. In general, the reservation module 132 may be configured to interface with one or more travel merchant systems (e.g., inventory systems 106) to reserve travel services based on received data. The payment solution engine 134 is configured to receive a priced travel solution that includes one or more travel inventory items and one or more forms of payment and generate a payment solution that includes payment amounts allocated to the one or more forms of payment that may be used to pay for the one or more travel inventory items.Thepayment module 136 may be configured to interface with one or more financial institutions 108 to process payments to the one or more forms of payment according to the allocated payment amounts of the payment solution.

Moreover, various applications, components, programs, objects, modules, engines etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a reservation system 102 and/or modules/engines of the reservation system 102 may be implemented in one or more servers. Consistent with embodiments of the invention, the modules/engines 132-136 and/or other such modules/engines may be executing on one or more servers of the reservation system 102, and the modules/engines 132-136 may cause the processor 122 of the reservation system 102 to perform operations consistent with embodiments of the invention.

The memory 124 of the travel and reservation system 102 may generally store one or more databases including, for example, a form of payment database 138. The databases 138maycomprise data and supporting data structures that store and organize the data. In particular, the databases 138may be arranged with any database organization and/or structure including, but not limited to, a relational database, a hierarchical database, a network database, and/or combinations thereof. A database management system in the form of a computer software application executing as instructions on a processing unit of the reservation system 102 may be used to access the information or data stored in records of the databases 138in response to a query, where a query may be dynamically determined and executed by the operating system 130, other applications, and/or one or more modules/engines 132-136.

The form of payment database 138 may store information corresponding to forms of payment, including, for example, a form of payment hierarchy 140, revenue management rules, and/or one or more payment constraints 142. Consistent with embodiments of the invention, the payment solution engine 134 may query the form of payment database 138 to receive a form of payment hierarchy relevant to forms of payment received to pay for a priced travel solution. The payment solution engine 142 may query the form of payment database 138 to determine one or more revenue management rules associated with the forms of payment and/or travel inventory items, including for example surcharges for types of travel inventory items, processing fees for types of forms of payment, etc. In addition, the payment solution engine 134 may query the form of payment database 138 to receive one or more payment constraints associated with the forms of payment received to pay for the priced travel solution.

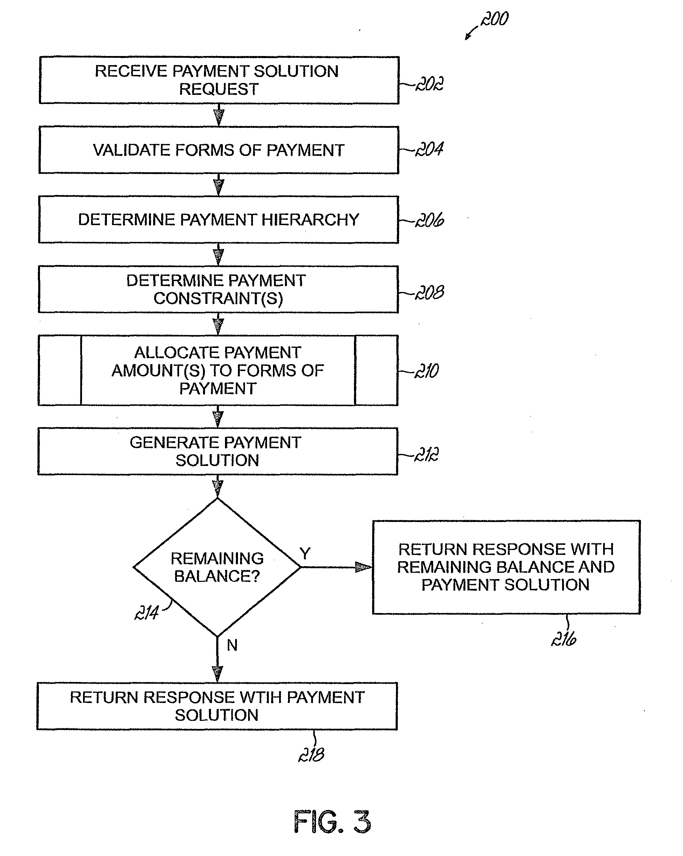

FIG. 3 provides a flowchart 300 that illustrates an example sequence of operations that may be performed by a reservation system 102 consistent with embodiments of the invention to generate a payment solution for a priced travel solution that includes one or more travel inventory items using one or more forms of payment. The reservation system 102 may receive a request to generate the payment solution for the priced travel solution using the one or more forms of payment (block 202). As discussed previously, form of payment information may be input by a user at the client device 104 and communicated to the reservation system 102. Consistent with some embodiments of the invention, the reservation system 102 may validate each identified form of payment. In general, validation of the identified forms of payment may include communication with one or more financial institutions to confirm that the form of payment is valid. The reservation system 102 may determine a payment hierarchy for the forms of payment (block 206). Consistent with embodiments of the invention, the reservation system 102 may identify the types of forms of payment to be used for the priced travel solution, and the reservation system 102 may query a data structure (such as the form of payment database 138 of FIG. 2) to determine an order in which the forms of payment are to be applied for payment of the priced travel solution. For example, a travel provider may indicate that refund vouchers should be used for payment first (i.e., have a higher priority). Similarly, a user (e.g., a customer or reservation agent) may indicate that a credit card should be used for payment last (i.e., have a lower priority).

The reservation system 102 may determine one or more payment constraints associated with the forms of payment (block 208). In general, payment constraints may constrain the application of types of forms of payment. For example, a travel provider may not allow a gift card and a refund voucher to be used in combination to pay for a travel inventory item. Similarly, a particular type of form of payment may be constrained from being used to pay for surcharges or taxes. For example, a travel provider may offer a promotional voucher to a preferred customer that may be limited to paying for a fare cost for a flight, but may be constrained from being used to pay for surcharges, taxes, extra bag fees, upgrade fees, etc. As another example, a form of payment may be constrained from being used after a certain date, on a particular day of the week, or before a certain date. Furthermore, according to travel industry standards, a payment constraint may limit the total number of forms of payment that may be used to pay for a travel inventory item. In general, data corresponding to a payment constraint that identifies at least one form of payment associated with the payment constraint and the rules/limitations of the payment constraintmay be stored in an accessible form of payment database 138, and the reservation system 102 may access the form of payment database 138 and determine one or more payment constraints applicable to a payment solution request based at least in part on the forms of payment associated with the payment solution request.

The reservation system may allocate payment amounts to the one or more forms of payment (block 210) based at least in part on the payment hierarchy and the one or more payment constraints associated with the forms of payment. Consistent with embodiments of the invention, the reservation system 102 may allocate a payment amount to each form of payment, where the sum of the payment amounts may correspond to the cost of each travel inventory item of the priced travel solution. However, if the forms of payment cannot fully cover the total cost of the priced travel solution, or if due to payment constraints, the total cost of the priced travel solution cannot be covered by the forms of payment, the reservation system 102 may determine a remaining balance needed for the priced travel solution. For example, if a travel solution includes a travel inventory item having a cost including a fare of $500 and taxes of $70, the forms of payment include a gift card with a balance of $600 and $30 of cash, and the gift card is constrained from paying taxes, the reservation system 102 may allocate a payment amount of $500 to the gift card and $30 to the cash and determine the remaining balance for the priced travel solution to be $40.

Furthermore, in some embodiments, when allocating the payment amounts to each form of payment, the reservation system 102 may determine all possible payment amount allocations (i.e., candidate allocations of payment amounts) based on the travel inventory items of the priced travel solution, the forms of payment, the payment hierarchy, and the one or more payment constraints. In these embodiments, the reservation system may analyze each candidate allocation of payment amounts, and the reservation system 102 may select one candidate allocation of payment amounts as anoptimized allocation based on the payment constraints and the payment hierarchy. For example, if the payment hierarchy indicates that a credit card has a lowest priority (i.e., the payment amount allocated to the credit card should be minimized), the reservation system may select a particular allocation of payment amounts that allocates the lowest payment amount to the credit card as the optimized allocation of payment amounts. In this example, the desired lowest payment amount would be zero - i.e., the credit card is not used for payment; however, due to payment constraints and the other forms of payment input, non-use of the credit card may not be possible. In general, determining all possible candidate allocation of payment amounts and comparing the candidates to select a best allocation of payment amounts may be referred to as a brute force approach to allocating payment amounts to the forms of payment.

In some embodiments, when allocating the payment amounts to each form of payment, the reservation system 102 may determine a candidate payment amount allocation according to the payment hierarchy and the one or more payment constraints, and the reservation system may optimize the candidate payment amount allocation based at least in part on the one or more payment constraints and the payment hierarchy.To determine a candidate payment amount allocation, for each travel inventory item, the reservation system 102 may allocate a payment amount to each form of payment according to the payment hierarchy until the cost of the travel inventory item is covered or the credit balance of the forms of payment are completely allocated, where the allocation may be constrained by the one or more payment constraints. In these embodiments, the reservation system 102 may analyze the candidate payment amount allocation and adjust the allocated payment amounts according to the payment hierarchy and the one or more payment constraints to thereby determine an optimized allocation of payment amounts. For example, if a payment hierarchy defines a credit card as having a lowest priority among the forms of payment (i.e., the payment amount allocated to the credit card should be minimized), the reservation system may reallocate the payment amounts of the candidate allocation of payment amounts to minimize the payment amount allocated to the credit card for the final allocation of payment amounts. In general, determination of a allocation of payment amounts and optimization thereof may be referred to as a greedy approach that may be implemented in embodiments of the invention such that processing resource savings may be realized and response time may be improved as compared to the brute force approach. The optimization of the payment amounts may be based at least in part on the minimization of payment amounts allocated to one or more forms of payment having the lowest priority in the payment hierarchy.

Based on the allocated payment amounts (e.g., the optimizedallocation of payment amounts), the reservation system 102 may generate a payment solution (block 212). In general, the payment solution indicates each travel inventory item of the priced travel solution and a payment amount allocated to one or more forms of payment that may be applied to thereby pay for the travel inventory item. If the payment solution does not cover the total cost of the priced travel solution (or cannot pay for the total cost of the priced travel solution due to one or more payment constraints) such that there is a remaining balance needed to be paid for the priced travel solution("Y" branch of block 214), the reservation system 102 may return a response to a client device 104 that includes the payment solution and the remaining balance (block 216). If the payment solution covers the total cost of the priced travel solution such that there is not a remaining balance ("N" branch of block 214), the reservation system 102 may return a response to the client device 104 that includes the payment solution (block 218).

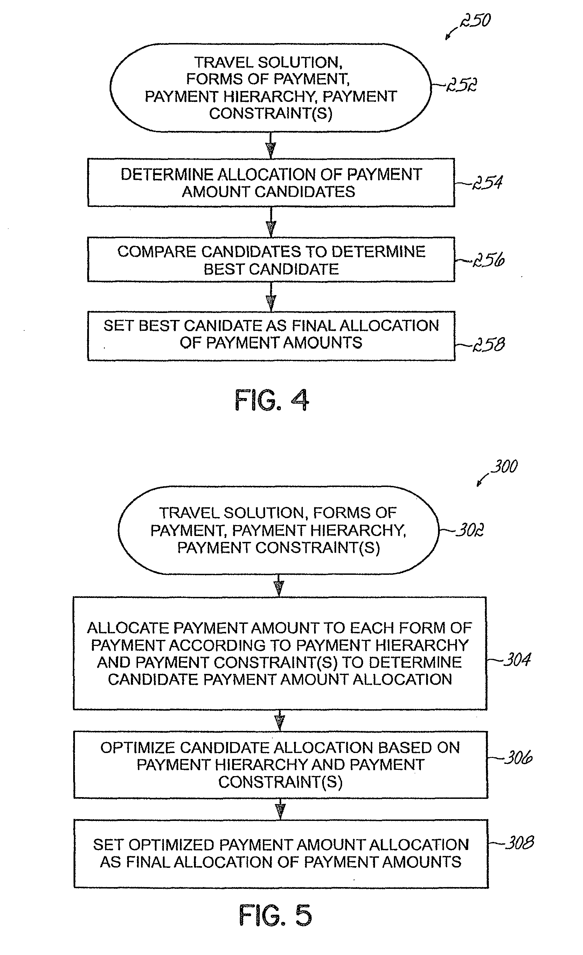

FIG. 4 provides a flowchart 250 that illustrates an example sequence of operations that may be performed by the reservation system 102 to allocate payment amounts to one or more forms of payment as described with respect to block 210 of FIG. 3. As shown, the inputs for allocation of payment amounts includes a priced travel solution having one or more travel inventory items, one or more forms of payment, a payment hierarchy associated with the forms of payment, and one or more payment constraints associated with one or more of the forms of payment (block 252). The reservation system may determine all possible allocation of payment amounts (i.e., candidate payment amount allocations) based on the payment constraints and/or the payment hierarchy (block 254). The reservation system 102 may compare the candidate payment amount allocations to determine a best candidate allocation of payment amounts (block 256). A best candidate allocation of payment amounts may be determined based on the payment hierarchy, where payment amounts allocated to forms of payment having lower priorities are minimized. For example, if a first candidate allocation of payment amounts includes a payment amount of $50 allocated to a credit card, a second candidate allocation of payment amounts includes a payment amount of $0 allocated to the credit card, and a payment hierarchy indicates that the credit card has a lowest priority (i.e., the payment amount allocated to the credit card should be minimized relative to the other forms of payment), the reservation system 102 may determine the second candidate allocation of payment amounts as the best candidate allocation of payment amounts. The best candidate may be set as the optimized allocation of payment amounts (block 258), which may be used to generate the payment solution.

Turning now to FIG. 5 this figure provides a flowchart 300 that illustrates another example sequence of operations that may be performed by the reservation system 102 to allocate payment amounts to one or more forms of payment as described with respect to block 210 of FIG. 3. As discussed previously, in some embodiments, the reservation system 102 may determine a candidate allocation of payment amounts and optimize the candidate allocation of payment amounts to determine an optimized allocation of payment amounts for the payment solution. In these embodiments, the priced travel solution, forms of payment, payment hierarchy, and/or the one or more payment constraints may be inputs upon which the allocation of payment amounts may be determined (block 302). The reservation system 102 may allocate payment amounts to each form of payment according to the payment hierarchy and payment constraints to determine the candidate allocation of payment amounts (block 304). In these embodiments, the reservation system may apply each form of payment to the costs of one or more travel inventory items in the order of the payment hierarchy and according to the one or more payment constraints, such that a credit balance of a form of payment having the highest priority is applied to the maximum extent possible for a first travel inventory item before a credit balance of a form of payment having a lower priority is applied. Applying each form of payment in the order of the payment hierarchy may be repeated for each travel inventory item according to the one or more payment constraints and based on the credit balance of each form of payment. In general, applying each form of payment to the maximum extent allowed according to the credit balance to the travel inventory items sequentially may be referred to as a greedy allocation process.

After determining the candidate allocation of payment amounts, the reservation system 102 may optimize the candidate allocation of payment amountsbased on the payment hierarchy and the one or more payment constraints (block 306). In general, optimizing the candidate allocation of payment amounts may include adjusting the allocated payment amounts for the forms of payment to determine a more preferred allocation of payment amounts for the forms of payment. In these embodiments, an allocation of payment amounts may be more or less preferred based at least in part the payment amount allocated to a form of payment having the lowest priority according to the payment hierarchy. Therefore, during optimization, the reservation system 102 may adjust the payment amounts allocated to each form of payment to minimize the payment amounts allocated to lower priority forms of payment. The reservation system 102 sets the optimized allocation of payment amounts as the optimized allocation of payment amounts for the payment solution (block 308).

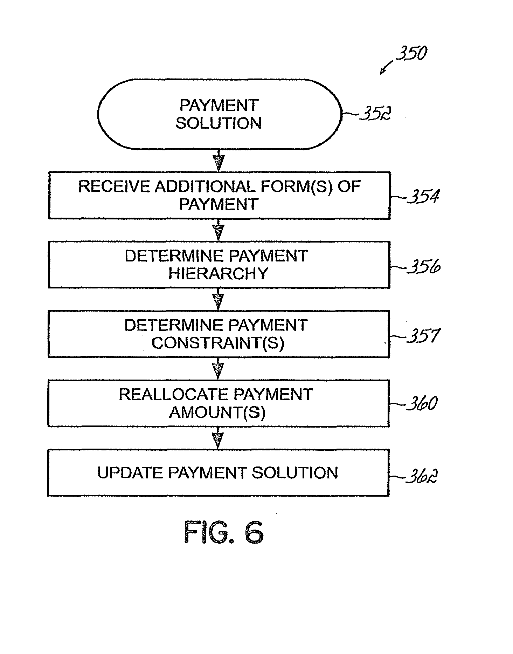

FIG. 6 provides a flowchart 350 that illustrates an example sequence of operations that may be performed by the reservation system 102 consistent with embodiments of the invention in response to receiving an additional form of payment after a payment solution (block 352) has been determined. Consistent with some embodiments of the invention, forms of payment may be input in an iterative manner. Therefore, in some embodiments of the invention, after the generation of a payment solution, a user may submit an additional form of payment that the reservation system 102 may receive (block 352). The reservation system 102 may determine a payment hierarchy corresponding to the forms of payment of the payment solution and the additional form of payment (block 354), and the reservation system 102 may determine one or more payment constraints for the forms of payment (including the additional form of payment) (block 356). Based on the payment hierarchy, the one or more payment constraints, the reservation system 102 may reallocate payment amounts to the forms of payment (block 358), and the reservation system 102 may update the payment solution based on the reallocated payment amounts (block 360).

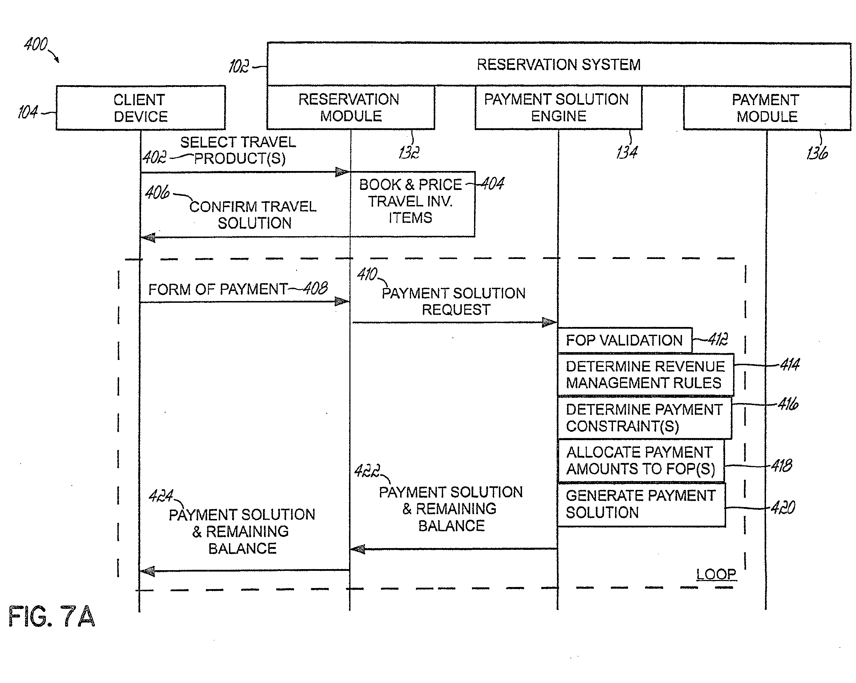

Referring now to FIG. 7A, this figure provide a flowchart 400 that illustrates an example sequence of operations that may be performed by a client device 104 and the reservation module 132, the payment solution engine 134, and the payment module 136 of the reservation system 102 consistent with some embodiments of the invention to allocate payment amounts for a priced travel solution among one or more forms of payment. A user may select one or more travel products for which travel inventory items are to be reserved, and the selection may be communicated to the reservation system 102, where the reservation module may process the selection (block 402). The reservation module 132 may book and price travel inventory items based on the selected travel products (block 404), and the reservation module 132 may communicate a travel solution based on the booked and priced travel inventory items to the client device (block 406).

The flowchart 400 of FIG. 7A illustrates a sequence of operations that may be performed when forms of payment are input in an iterative manner such that the allocation of payment amounts may be updated responsive to receiving each form of payment. After reviewing the travel solution at the client device 104, the user may input information for a form of payment,and the client device may communicate information for the form of payment for the priced travel solution (block 408) to the reservation system 102. The reservation module 132 may communicate a request to the payment solution engine 134 that indicates the one or more travel inventory items of the priced travel solution and any input/received forms of payment (block 410). In response to receiving the request, the payment solution engine 134 may validate each form of payment (block 412). Validation may optionally include communication with a third party financial institution to determine whether the form of payment is valid and usable for payment. Furthermore, if the form of payment is associated with a travel provider or other travel service related provider, validation may include communication with a system of the travel provider or other travel service related provider to determine whether the form of payment is valid and usable for payment. For example, if an airline issues a traveler a refund voucher, validation may include confirming the credit balance and validity of the refund voucher with the airline. Similarly, if a travel agency issues a traveler a promotional voucher, validation may include confirming the credit balance and validity of the promotional voucher with the travel agency.

After validating the one or more forms of payment, the payment solution engine 134 determines revenue management rules (block 414) that include a payment hierarchy associated with the one or more forms of payment. In general, the revenue management rules associated with the travel inventory items of the priced travel solution includes a payment hierarchy and/or rules that may be applied based on the forms of payment to determine a payment hierarchy. In addition, the revenue management rules may include additional fees that should be applied with types of forms of payment. For example, the revenue management rules may indicate that a processing fee should be added to a price if a form of payment used is a credit card.The payment solution engine 134 determines any payment constraints associated with the received forms of payment (block 416). Based on the payment hierarchy and the determined payment constraints, the payment solution engine 134 allocates payment amounts to each form of payment to pay for the priced travel solution (block 418). In embodiments of the invention in which forms of payment may be input iteratively, during allocation of the payment amounts, the payment solution engine 134 may determine a remaining balance that corresponds to a difference between a total cost of the priced travel solution and the payment amounts allocated to the forms of payment. The payment solution engine 134 may generate a payment solution for the priced travel solution based on the payment amounts allocated to the forms of payment (block 420). The payment solution may include an indication of each travel inventory item of the priced travel solution and a payment amount allocated to each form of payment that is to be used to pay for the travel inventory item. The payment solution engine 134 communicates the payment solution and any remaining balance to the reservation module 132 (block 422), and the reservation module 132 may communicate the payment solution and remaining balance to the client device for review (block 424).

As discussed, flowchart 400 provides a sequence of operations that facilitate iterative input of forms of payment. In embodiments of the invention that implement an iterative form of payment input, the reservation system 102 may perform a loop (labeled as 'LOOP') of the operations represented in blocks 408-424 to until the remaining balance for the priced travel solution is zero. Hence, a user may input forms of payment iteratively, and the payment amounts allocated to each input form of payment may be updated in response to receiving an additional form of payment, and the payment solution and remaining balance may be updated. Once enough forms of payment have been input to cover the total cost of the priced travel solution, the loop may end.

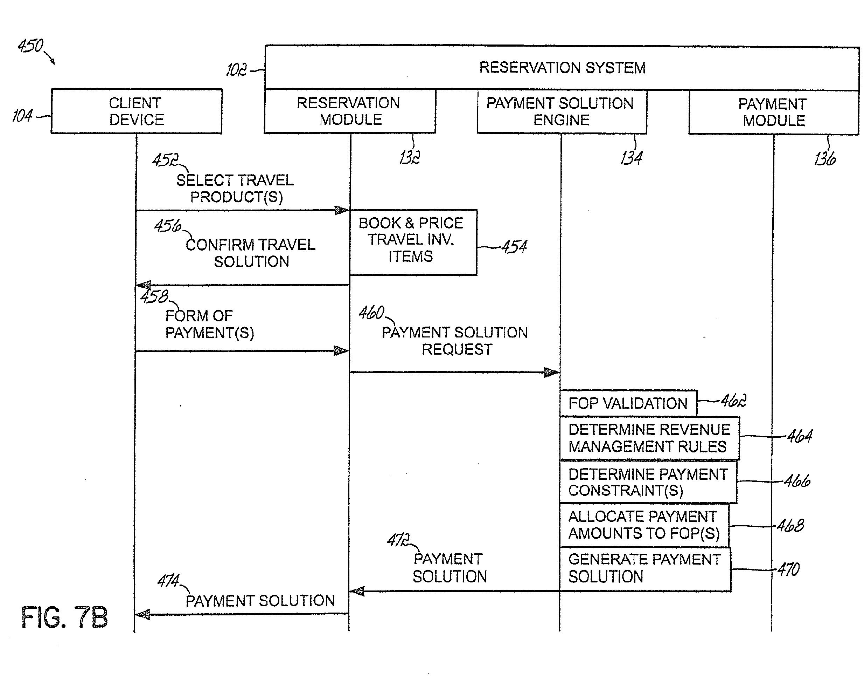

FIG. 7B provides a flowchart 450 that illustrates another example sequence of operations that may be performed by a client device 104 and the reservation module 132, the payment solution engine 134, and the payment module 136 of the reservation system 102 consistent with some embodiments of the invention to allocate payment amounts for a priced travel solution among one or more forms of payment. A user (e.g., a customer or a travel agent) may select travel products for booking, and the selected travel products may be communicated to the reservation module 132 (block 452). The reservation module may book and price travel inventory items corresponding to the selected travel products (block 454), and communicate a confirmation to the client device 104 that includes the travel solution (block 456). The user may input one or more forms of payment, and the one or more forms of payment may be communicated to the reservation system 102 to be used to pay for the travel solution (block 458). The reservation module 132 may communicate a payment solution request to the payment solution engine 134 that identifies the travel inventory items of the priced travel solution and the one or more forms of payment (block 460).

The payment solution engine 134 validates the one or more forms of payment (block 462), determines any relevant revenue management rules such that a payment hierarchy for the forms of payment may be determined (block 464), and determines any payment constraints associated with the one or more forms of payment (block 466). Based on the payment hierarchy and the payment constraints associated with the one or more forms of payment, the payment solution engine 134 allocates payment amounts to the one or more forms of payment to pay for the travel inventory items of the priced travel solution (block 468). The payment solution engine 134 generates a payment solution based on the allocated payment amounts that identifies each travel inventory item of the priced travel solution and the payment amount allocated to each of the one or more forms of payment to pay for the travel inventory item (block 470). The payment solution may be returned to the reservation module 132 (block 472), and communicated to the client device 104 for review (block 474).

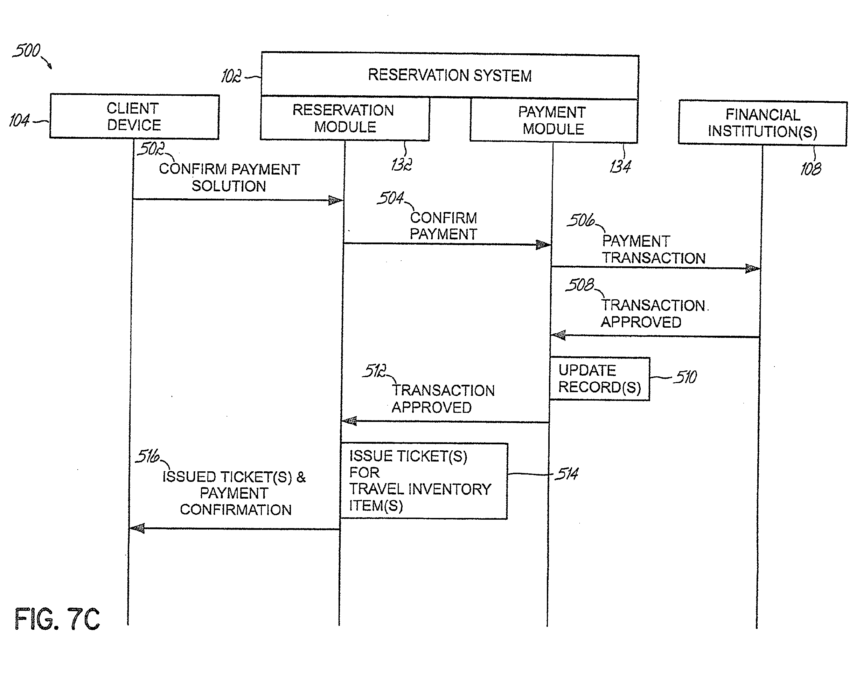

Turning now to FIG. 7C, this figure provides a flowchart 500 that illustrates a sequence of operations that may be performed by the client device 104, the reservation module 132 and payment module 136 of the reservation system 102, and one or more financial institutions 108 consistent with embodiments of the invention to process a payment solution generated in FIGS. 7A or 7B. A user may review the payment solution at the client device 104, and upon confirmation, the client device 104 communicates a confirmation to the reservation module 132 (block 502). The reservation module 132 may communicate a payment confirmation that identifies the one or more forms of payment, the allocated payment amounts, and the priced travel solution to the payment module 136 (block 504) such that the payment module processes a payment for the priced travel solution according to the payment solution. For each form of payment of the payment solution, the payment module communicates a payment transaction request to a financial institution 108 associated with the form of payment to reserve/collect the payment amount allocated to the form of payment (block 506). For each form of payment and transaction request, the payment module 136 receives a transaction approval response (block 508), and the payment module updates one or more records (block 510) associated with the travel solution and/or traveler, including, for example, a passenger name record, a record associated with the payment solution, etc. The payment module 136 communicates a transaction approved response (block 512) to the reservation module 132 to thereby indicate that the payment has been processed for the priced travel solution, and the reservation module 132 may issue tickets for the travel inventory items of the priced travel solution (block 514). The one or more issued tickets and a payment confirmation for the payment solution may be returned to the client device 104 (block 516).

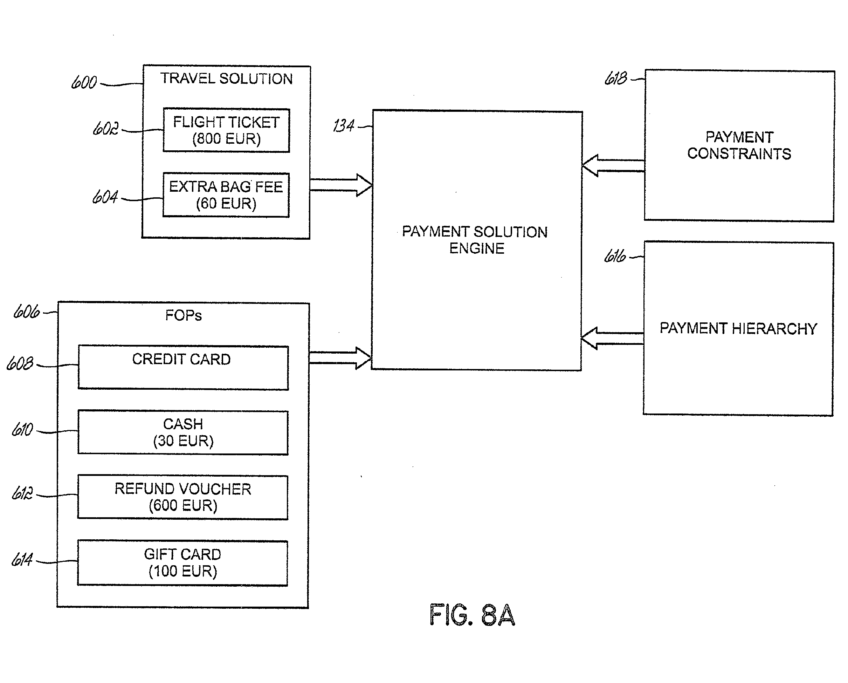

FIGS. 8A-H illustrate an example allocation of payment amounts that may be performed consistent with embodiments of the invention that may be referred to as a greedy allocation. Referring to FIG. 8A, a priced travel solution 600 that includes a flight ticket 602 with a cost of 800€ and an extra bag service fee 604 with a cost of 60€ may be input into a payment solution engine 134. A plurality of forms of payment 606 may be input into the payment solution engine 134 to pay for the travel solution 600. In this example, the forms of payment 606 include: a credit card 608; cash 610 in the amount of 30€; a refund voucher 612 with a credit balance of 600€; and a gift card 614 with a credit balance of 100€. The payment solution engine 134 may determine a payment hierarchy 616 and one or more payment constraints 618 associated with the input forms of payment 606.

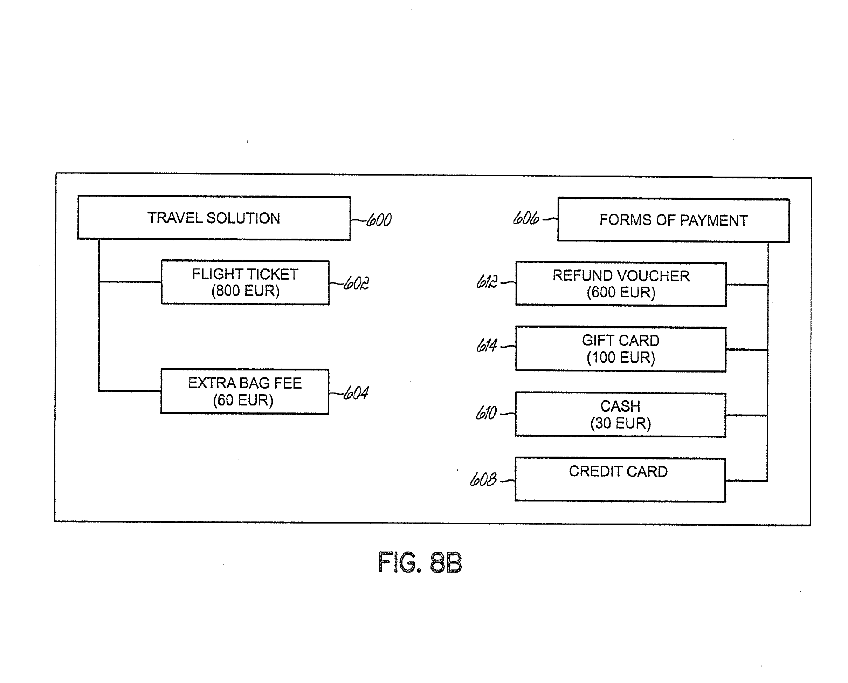

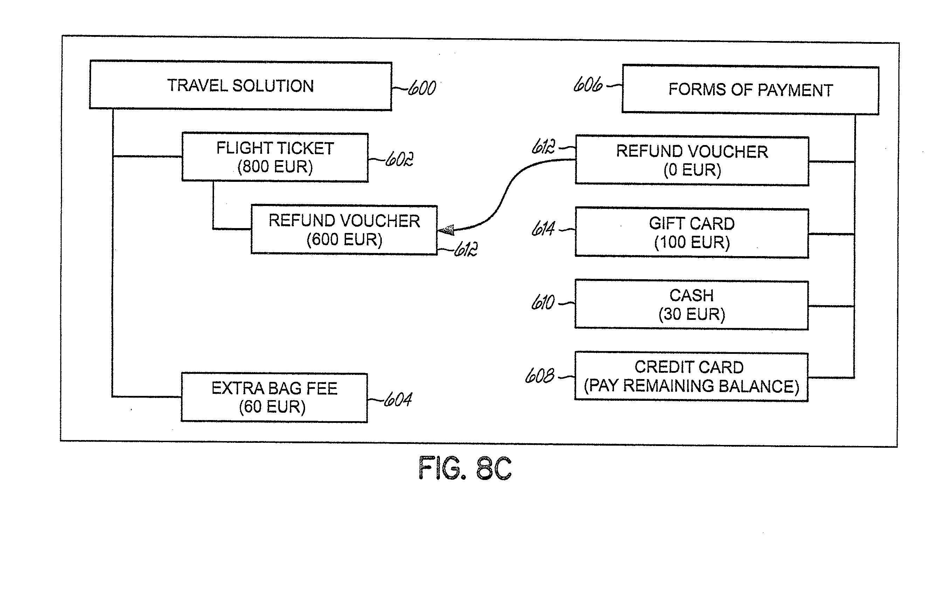

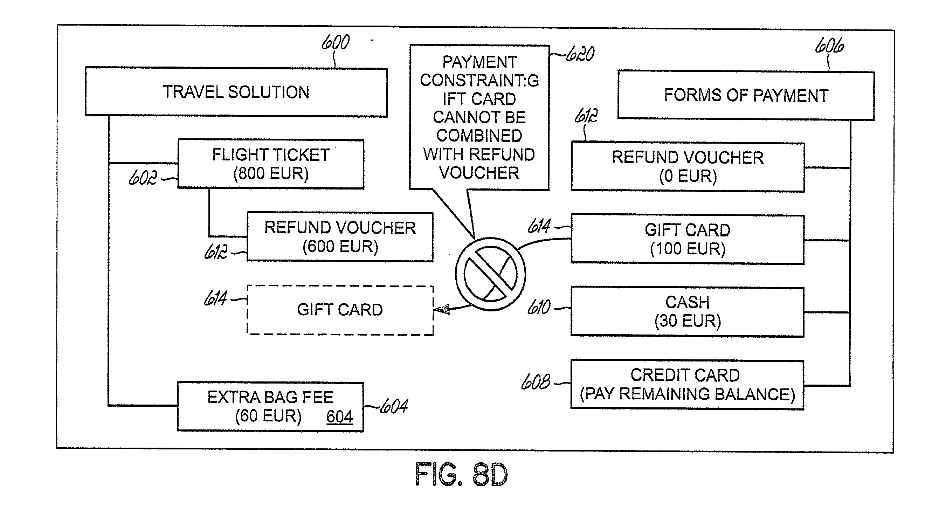

As shown in FIG. 8B, the payment solution engine may order the forms of payment 606 according to the determined payment hierarchy 616. In this example, the payment hierarchy indicates that the refund voucher 612 has a first or highest priority such that the credit balance of the refund voucher should be used to the maximum extent permitted (i.e., the maximum amount in view of the one or more payment constraints) prior to use of other forms of payment. The gift card 614, cash 610, and credit card 608 are ordered respectively after the refund voucher 612, such that the credit card has the lowest priority - i.e., the payment amount allocated to the credit card 608 should be minimized.As shown, according to the payment hierarchy 616, the credit card 608 may be used to pay for any remaining balance after the higher priority forms of payment have been applied. In FIG. 8C, the refund voucher 612 is allocated to the flight ticket 602, such that a payment amount of 600€ is allocated to the refund voucher 612 to thereby completely use the credit balance of the refund voucher 612. In FIG. 8D, the payment solution engine 134 attempts to allocate the gift card 614 (i.e., the next form of payment according to the payment hierarchy) to the flight ticket 602, but a payment constraint 620 limits combining the refund voucher 612 and the gift card 614 to pay for a travel inventory item.

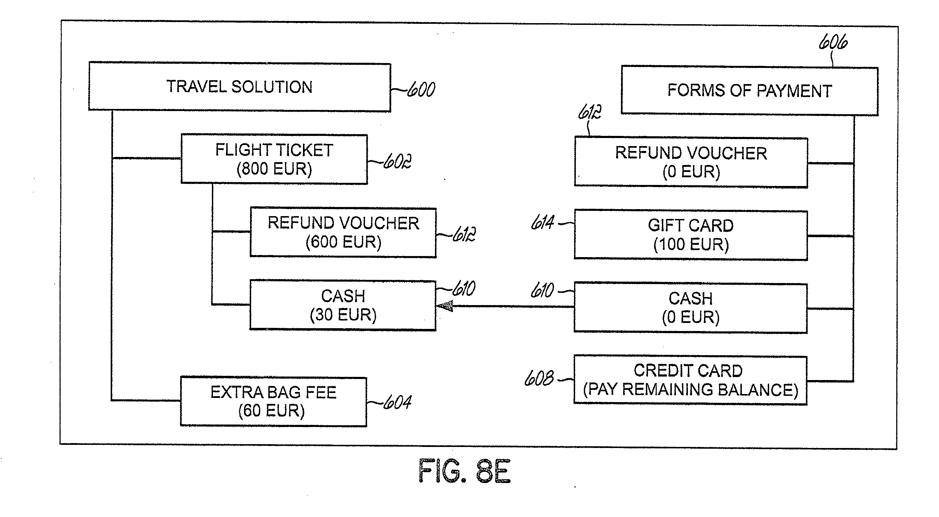

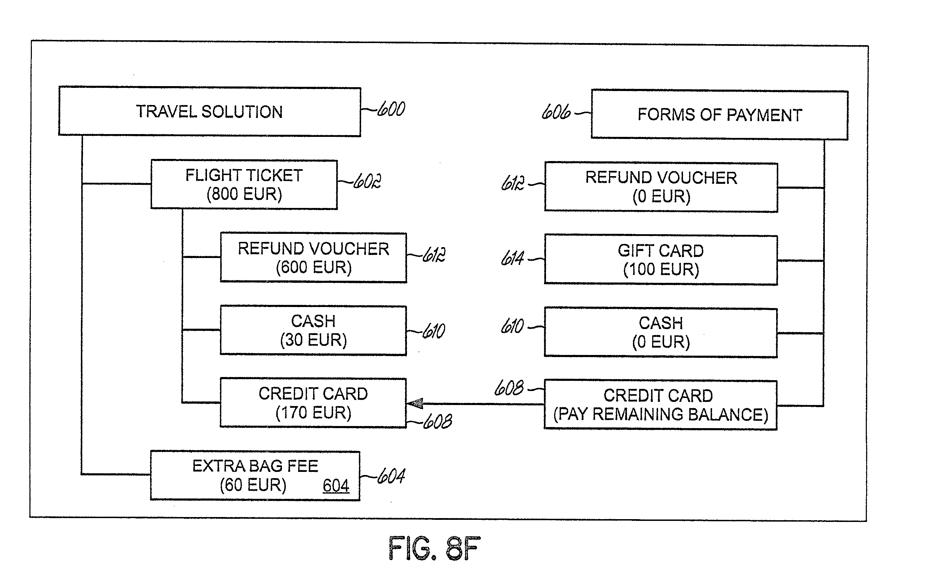

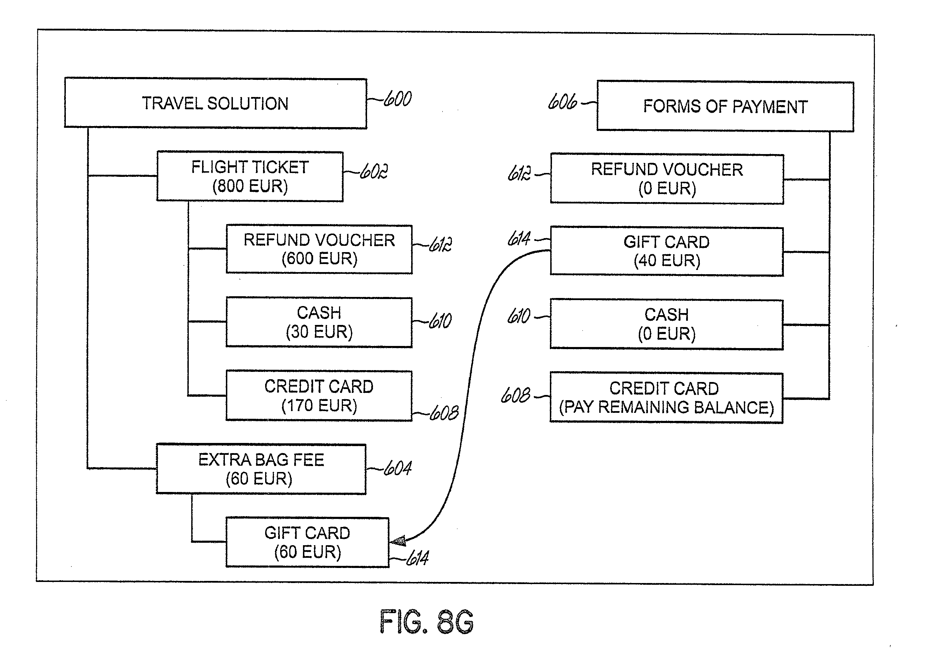

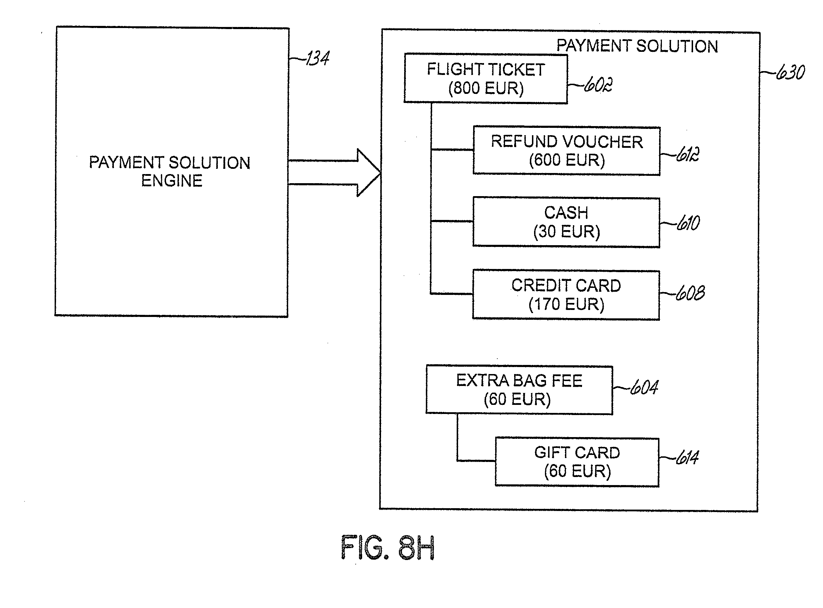

Therefore, as shown in FIG. 8E, the payment solution engine 134 allocates the cash (i.e., the third form of payment in the payment hierarchy) to the flight ticket 602, such that the payment amount of 30€ is allocated to the cash 610. In FIG. 8F, the payment solution engine 134 allocates the credit card 608 to the flight ticket 602 such that a payment amount of 170€ is allocated to the credit card 608 to cover the remaining 170€ of the cost of the flight ticket 602. In FIG. 8G, the payment solution engine 134 allocates the gift card 614 to the extra bag fee 604 such that a payment amount of 60€ is allocated to the gift card 614. The payment solution engine 134 may generate a payment solution 630 based on the allocated payment amounts of FIGS. 8C-G as shown in FIG. 8H. The payment solution 630 indicates each travel inventory item, and for each travel inventory item, each form of payment and the allocated payment amount of the form of payment associated with the travel inventory item. In this example, the payment solution 630indicates a payment amount of 600€ is allocated to therefund voucher 612 for the flight ticket 602, a payment amount of 30€ is allocated to the cash 610 for the flight ticket 602, a payment amount of 170€ is allocated to the credit card 608 for the flight ticket, and a payment amount of 40€ is allocated to the gift card for the extra bag service fee 604.

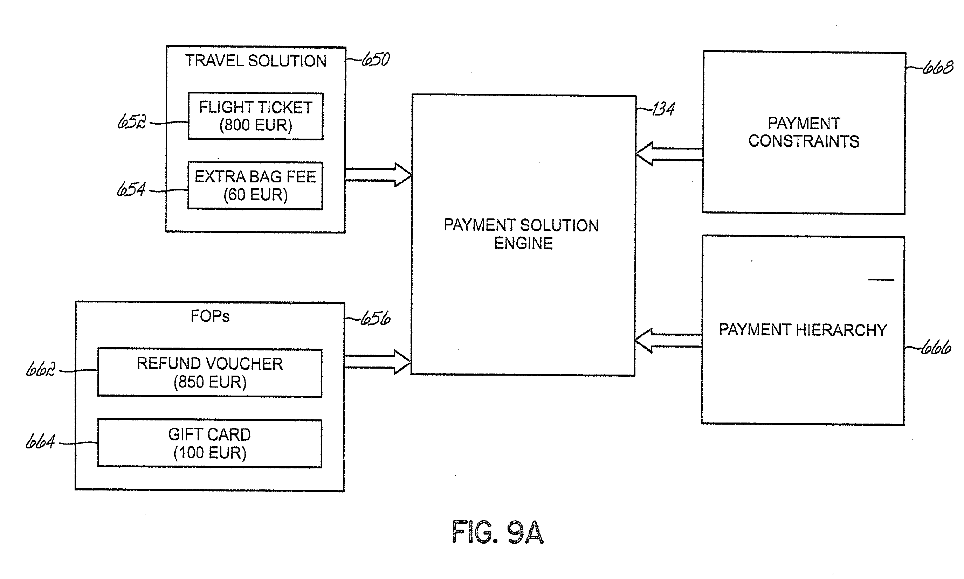

FIGS. 9A-H illustrate another example allocation of payment amounts that may be performed consistent with embodiments of the invention.Referring to FIG. 9A, a priced travel solution 650 that includes a flight ticket 652 with a cost of 800€ and an extra bag service fee 654 with a cost of 60€ may be input into a payment solution engine 134. A plurality of forms of payment 656 may be input into the payment solution engine 134 to pay for the travel solution. In this example, the forms of payment 656 include: a refund voucher 662 with a credit balance of 850€; and a gift card 664 with a credit balance of 100€. The payment solution engine 134 may determine a payment hierarchy 666 and one or more payment constraints 668 associated with the input forms of payment 656.

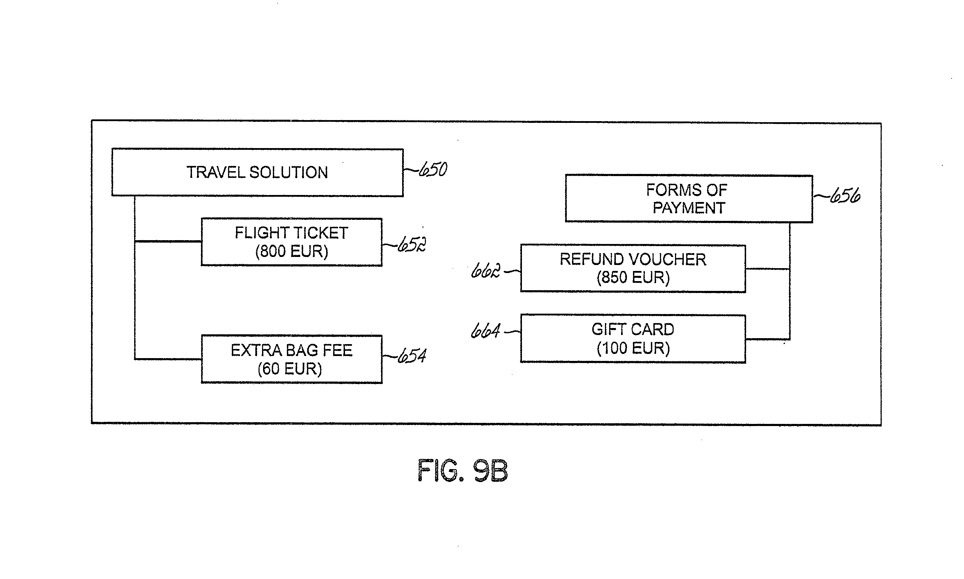

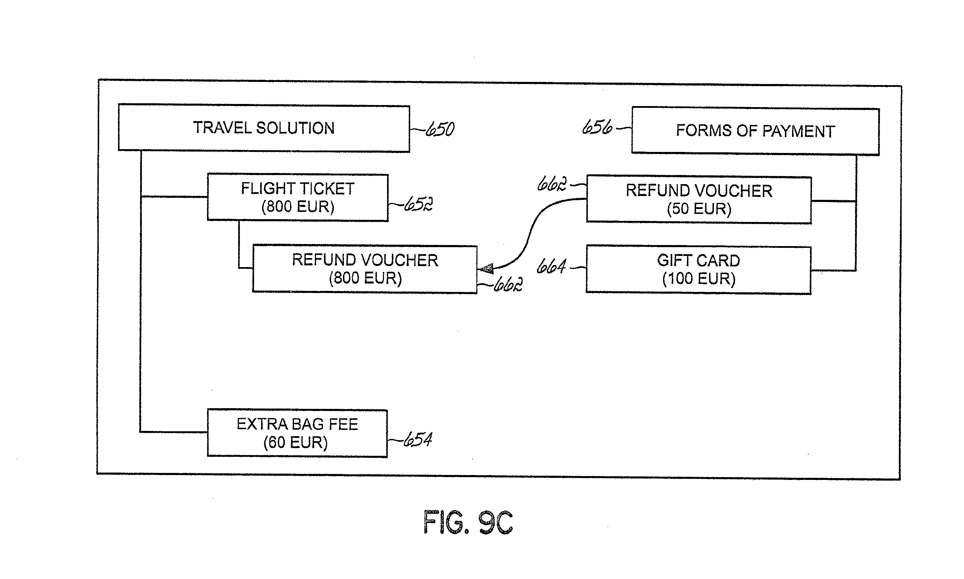

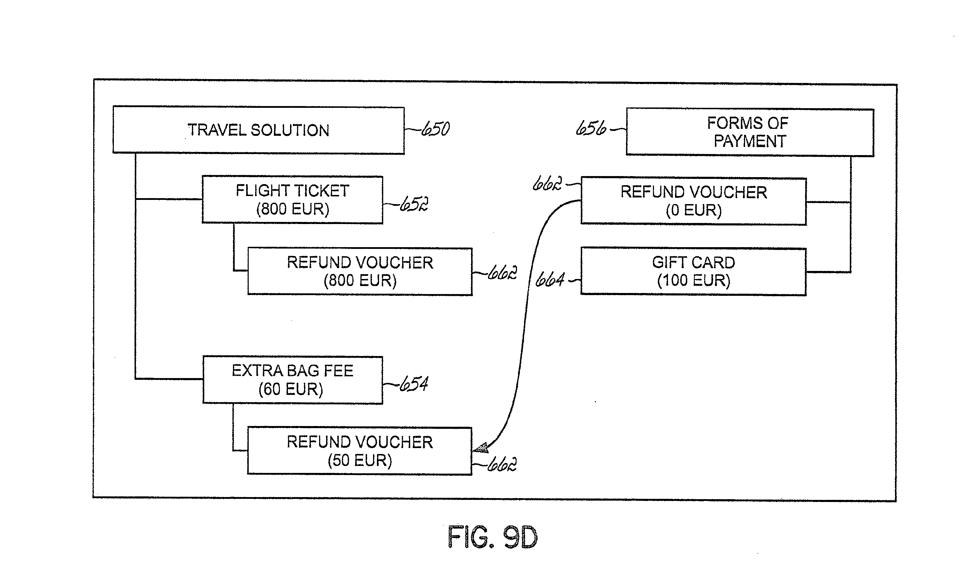

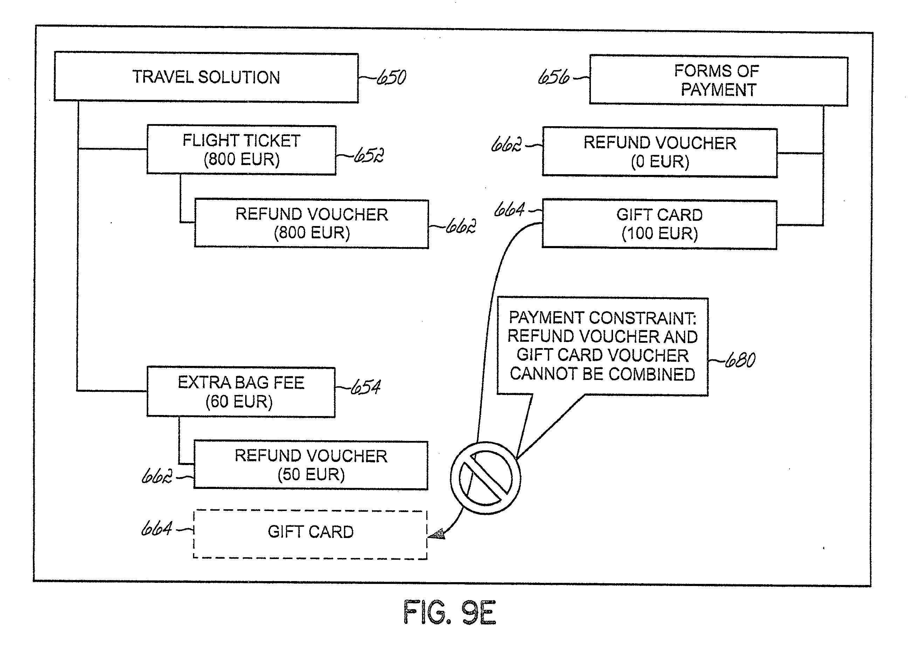

As shown in FIG. 9B, the payment solution engine may order the forms of payment 656 according to the determined payment hierarchy 666 of FIG. 9A. In this example, the payment hierarchy 666 indicates that the refund voucher 662 has a first or highest priority and the gift card 664 has a second or lower priority.In FIG. 9C, the refund voucher 662 is allocated to the flight ticket 652, such that a payment amount of 800€ is allocated to the refund voucher 662 and the refund voucher 662 includes an unallocated credit balance of 50€. In FIG. 9D, the payment solution engine 134 allocates the remaining credit balance of the refund voucher 662 to the extra bag service fee 654. In FIG. 9E, the payment solution engine 134 attempts to allocate the gift card 664 (i.e., the next form of payment according to the payment hierarchy) to the extra bag service fee 654, but a payment constraint 680 limits combining the refund voucher 662 and the gift card 664 to pay for a travel inventory item.

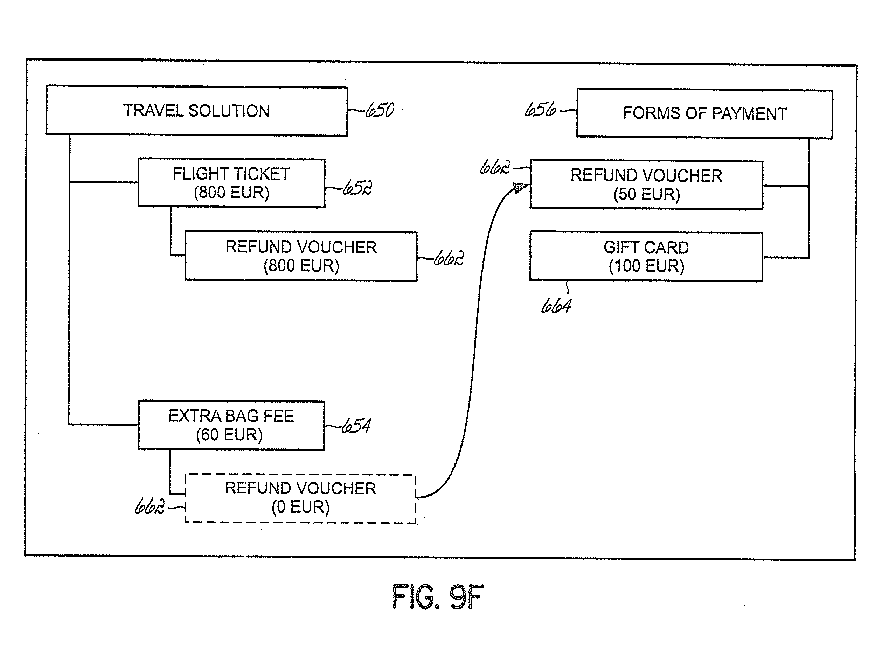

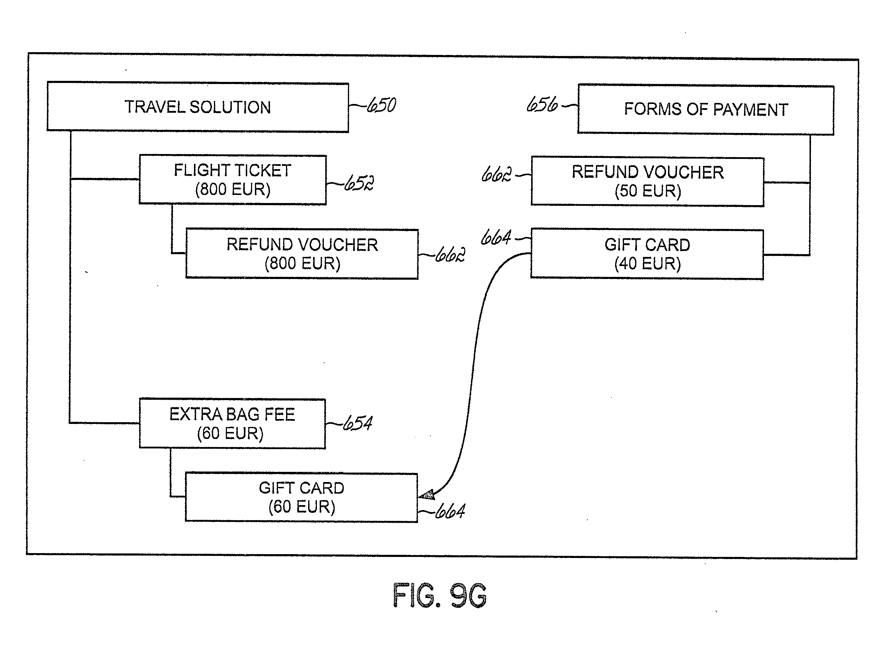

Therefore, as shown in FIG. 9F, the payment solution engine 134 removes the allocation of the refund voucher 662 to the extra bag service fee 654 to thereby determine whether an alternative allocation may be possible with the provided forms of payment 656. Hence, in this example, the payment solution engine 134 may "back-track" from an allocation of a payment amount for a first form of payment if a payment constraint limits application of the first form of payment and another form of payment such that an acceptable allocation (i.e., according to the payment hierarchy and one or more payment constraints) may not be possible. In FIG. 9G, the payment solution engine 134 allocates the gift card 664 to the extra bag service fee 654 such that a payment amount is allocated to the gift card 664 in the amount of 60€ and the gift card 664 includes an unallocated credit amount of 40€.

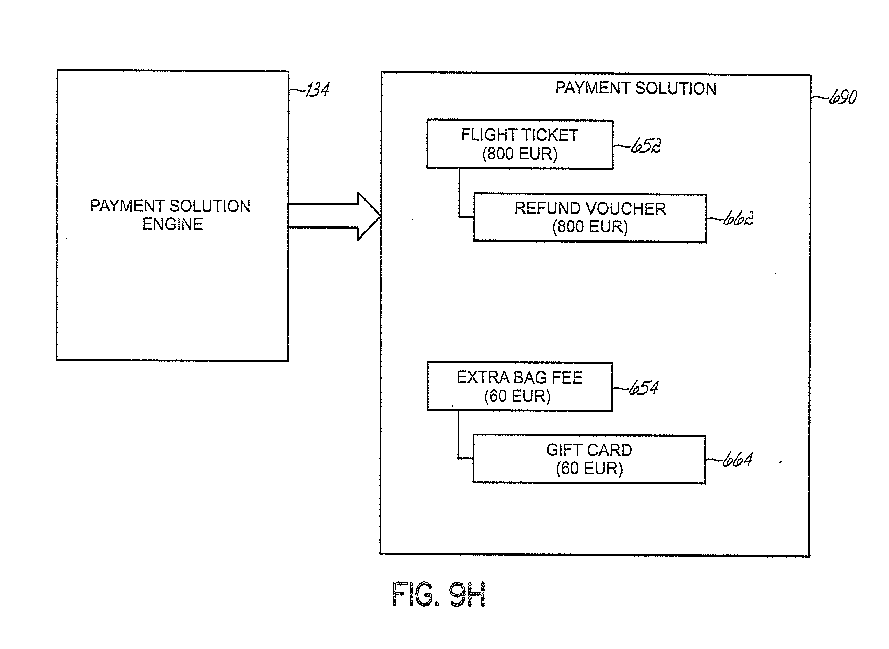

The payment solution engine 134 may generate a payment solution 690 based on the allocated payment amounts of FIGS. 9C-G as shown in FIG. 9H. The payment solution 690 indicates each travel inventory item, and for each travel inventory item, each form of payment and the allocated payment amount of the form of payment associated with the travel inventory item. In this example, the payment solution 690 indicates a payment amount of 800€ is allocated to the refund voucher 662 for the flight ticket 652, and a payment amount of 60€ is allocated to the gift card 664 for the extra bag service fee 654.

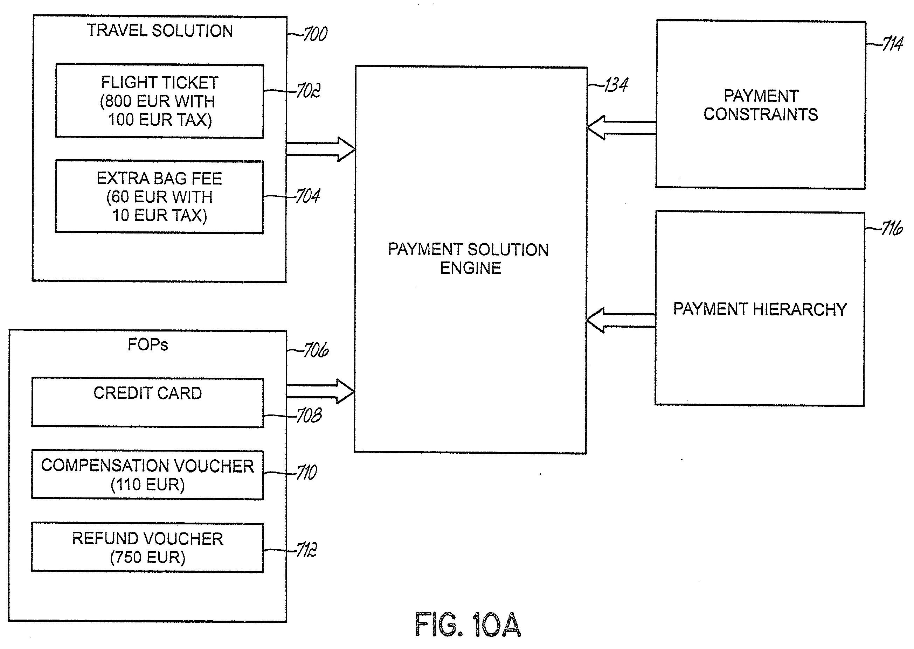

FIGS. 10A-E illustrate another example optimization of allocated payment amounts that may be performed consistent with embodiments of the invention. Referring to FIG. 10A, a priced travel solution 700 that includes a flight ticket 702 with a cost of 800€ (that includes 100€ of tax) and an extra bag service fee 704 with a cost of 60€ (that includes 10€ of tax) may be input into a payment solution engine 134. A plurality of forms of payment 706 may be input into the payment solution engine 134 to pay for the travel solution 700. In this example, the forms of payment 706 include: a credit card 708; a compensation voucher 710 with a credit balance of 110€; and a refund voucher 712 with a credit balance of 750€. The payment solution engine 134 may determine a payment hierarchy 714 and one or more payment constraints 716 associated with the input forms of payment 706.

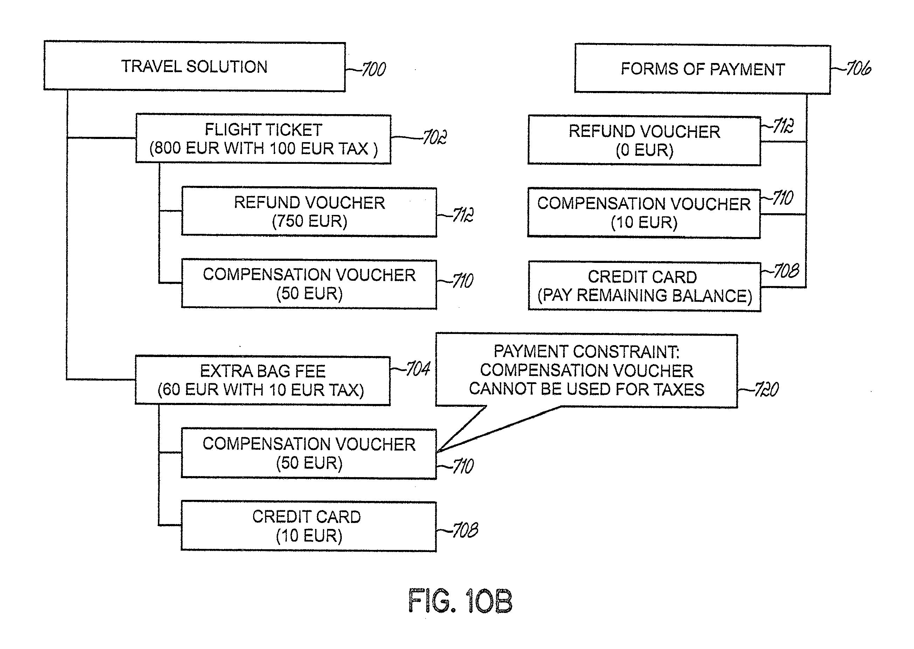

FIG. 10B illustrates a candidate allocation of payment amounts that may be determined consistent with embodiments of the invention. As shown in FIG. 10B, the payment hierarchy order associated with the forms of payment 706 is the refund voucher 712 first (i.e., highest), the compensation voucher 710 second, and the credit card 708 third (i.e., lowest). As shown, according to the payment hierarchy 714, the credit card 708 is to be used to cover the remaining balance after the higher priority forms of payment have been applied. In addition, a payment constraint 720 constrains the compensation voucher 710 from being used to pay for taxes. In the candidate allocation of payment amounts, a payment amount of 750€ is allocated to the refund voucher 712 for the flight ticket 702, a payment amount of 50€ is allocated to the compensation voucher 710 for the flight ticket 702, a payment amount of 50€ is allocated to the compensation voucher 710 for the extra bag service fee 704, and a payment amount of 10€ is allocated to the credit card for the extra bag service fee 704. As shown, based on the candidate allocation of payment amounts, the compensation voucher 710 includes an unallocated credit balance of 10€.

As discussed, consistent with embodiments of the invention, optimizing a candidate allocation of payment amounts generally corresponds to minimizing the payment amount allocated to the form of payment having the lowest priority according to the payment hierarchy. In this example, the credit card 708 is the form of payment having the lowest priority; therefore optimization may generally include minimizing the payment amount allocated to the credit card 708. The candidate allocation of payment amounts allocates 10€ to the credit card 708. Therefore, optimizing the candidate allocation of payment amounts determines whether the payment amount allocated to the credit card 708 may be reduced below 10€, with the best solution, if possible, being that the optimization reduces the payment amount allocated to the credit card 708 to 0€ - i.e., the credit card 708 is not used for payment.

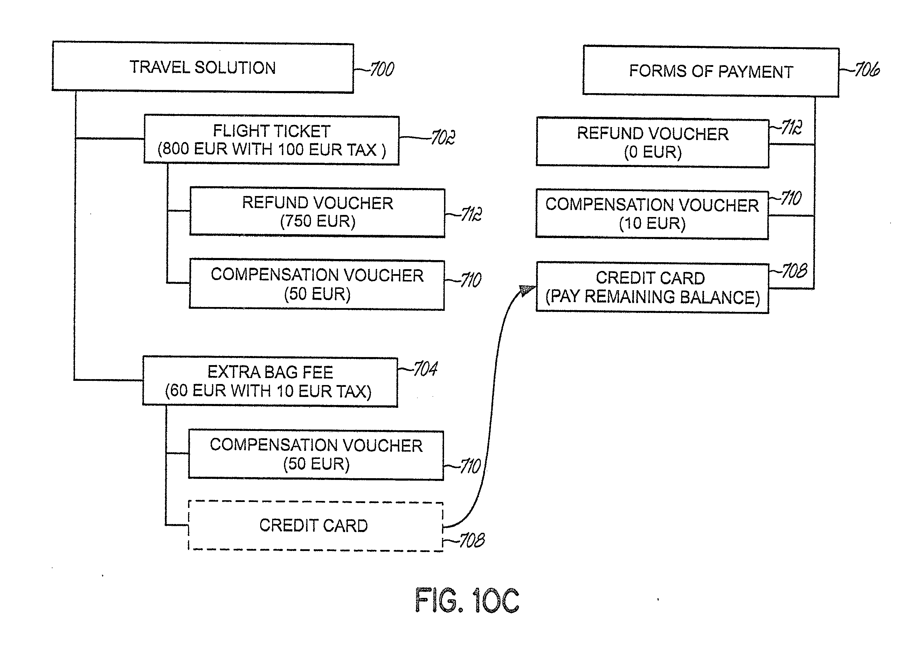

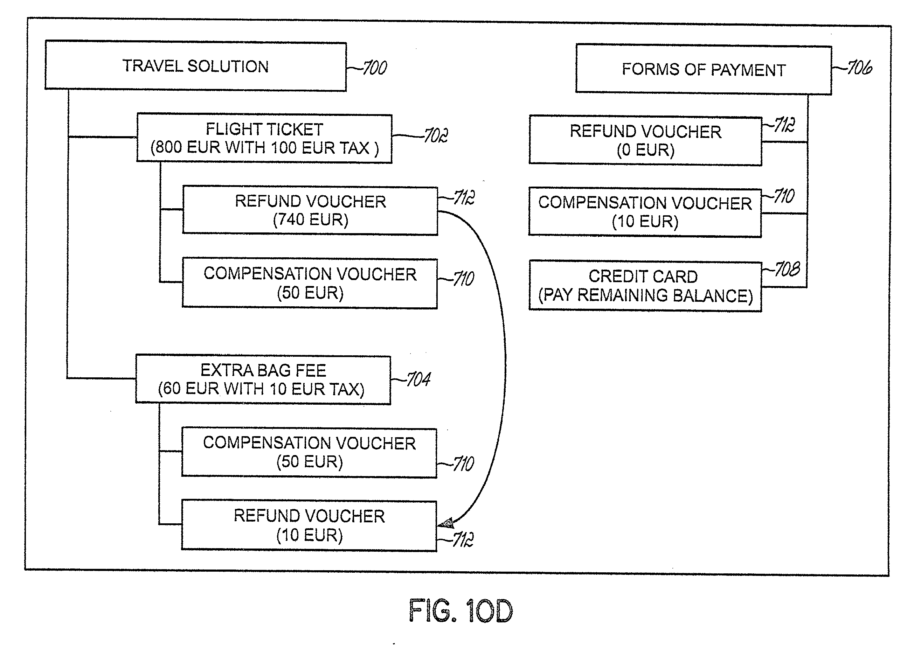

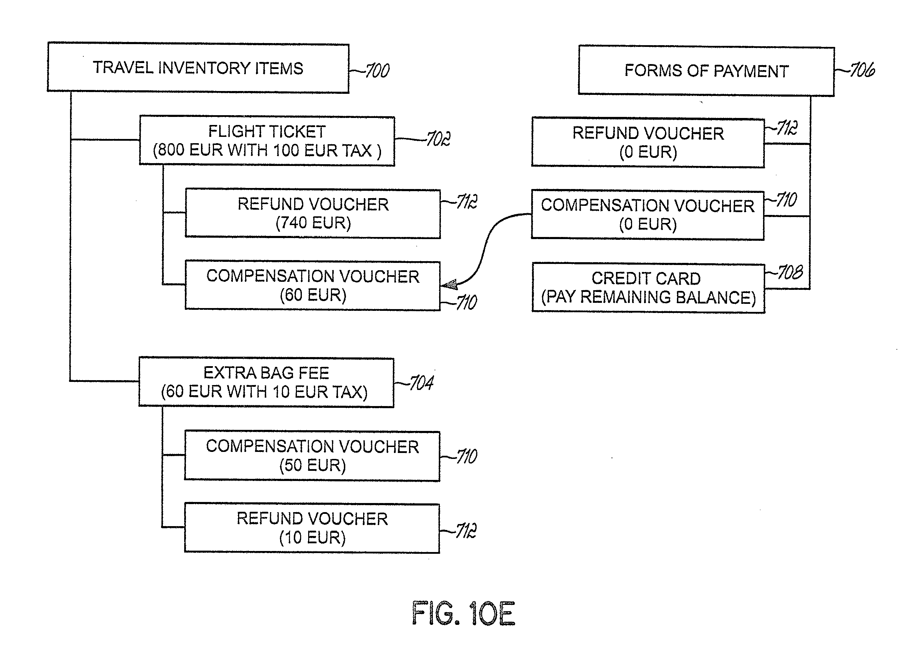

In FIG. 10C, the payment solution engine 134 removes the allocation of the credit card 708 to determine if adjusting the allocation of payment amounts to the refund voucher 712 and/or the compensation voucher 710 may permit an allocation of payment amounts that reduces (preferably to 0€) the payment amount allocated to the credit card 708. Due to the payment constraint 720 illustrated in FIG. 10B, the compensation voucher 710 cannot be used to pay for taxes. Therefore, in FIG. 10D, the payment solution engine 134 adjusts the payment amount allocated to the refund voucher 712 for the flight ticket 702 such that a payment amount of 10€ may be allocated to the refund voucher 712 for the 10€ of taxes of the extra bag service fee 704. Because the payment amount allocated to the refund voucher 712 for the flight ticket 702 was reduced by 10€, in FIG. 10E, the payment solution engine 134 adjusts the payment amount allocated to the compensation voucher 710 for the flight ticket 702 accordingly - such that the 10€ of previously unallocated credit balance for the compensation voucher 710 is now allocated for the flight ticket 702. Hence, the payment amount allocated to the credit card 708 is 0€ after optimization.

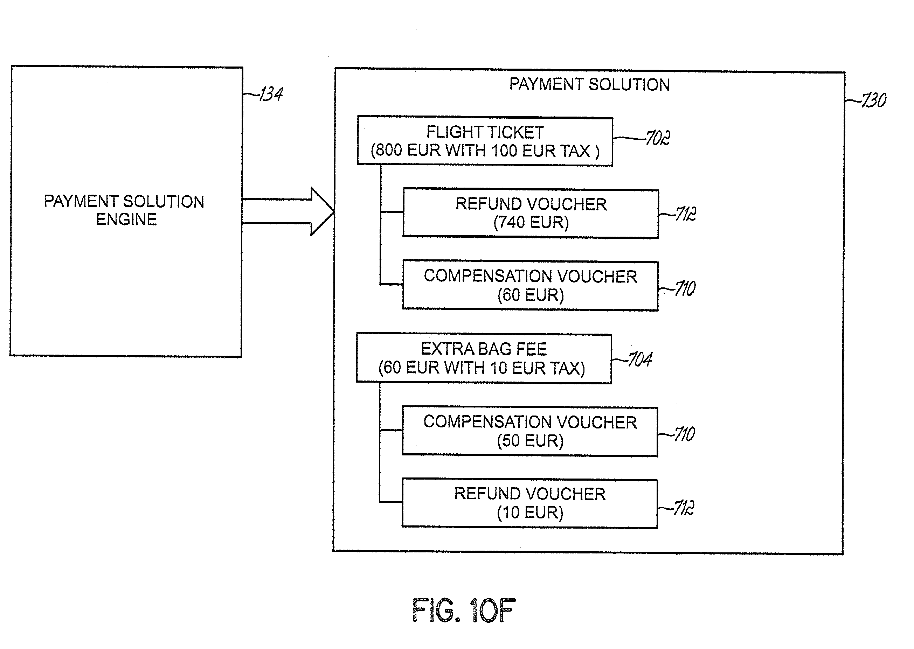

The payment solution engine 134 may generate a payment solution 730 based on the optimized allocated payment amounts of FIG. 10E as shown in FIG. 10F. The payment solution 730 indicates each travel inventory item, and for each travel inventory item, each form of payment and the allocated payment amount of the form of payment associated with the travel inventory item. In this example, the payment solution 730 indicates a payment amount of 740€ is allocated to the refund voucher 712 for the flight ticket 702, a payment amount of 60€ is allocated to the compensation voucher 710 for the flight ticket 702, a payment amount of 50€ is allocated to the compensation voucher 710 for the extra bag service fee 704, and a payment amount of 10€ is allocated to the refund voucher 712 for the extra bag service fee 704.

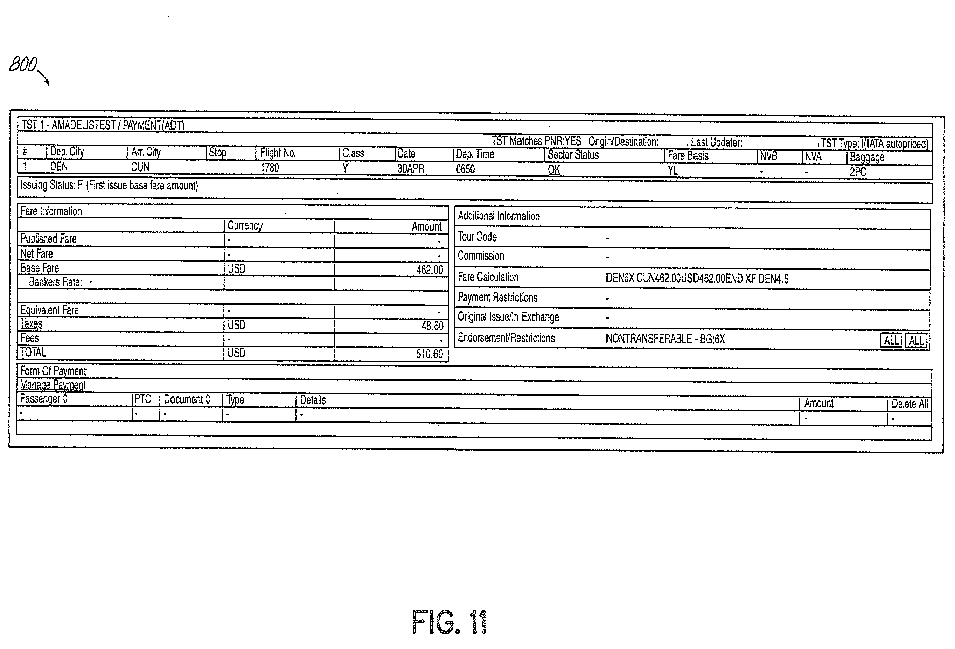

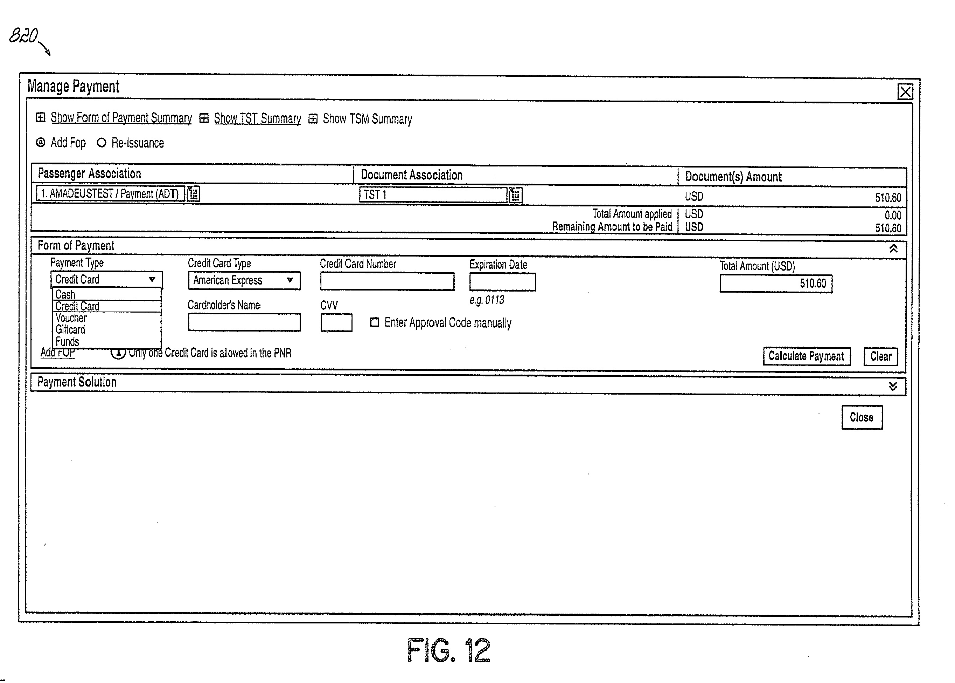

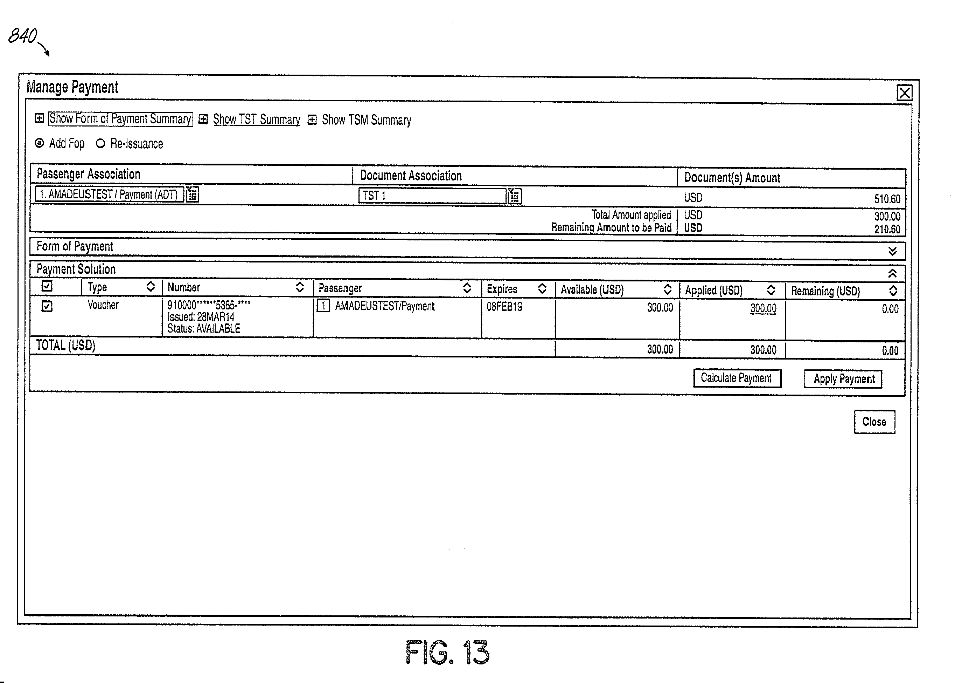

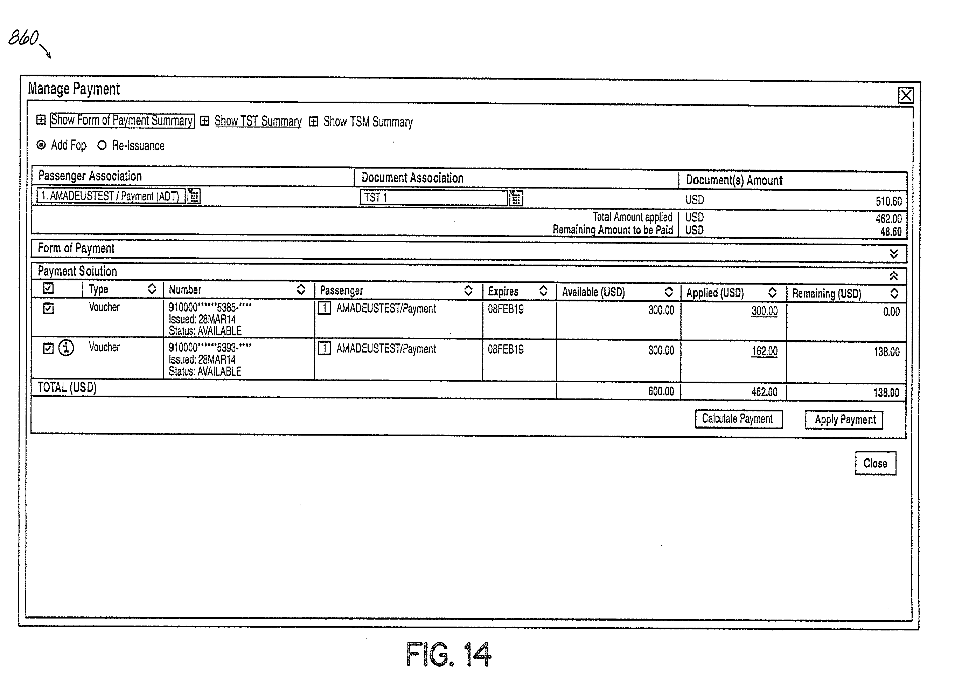

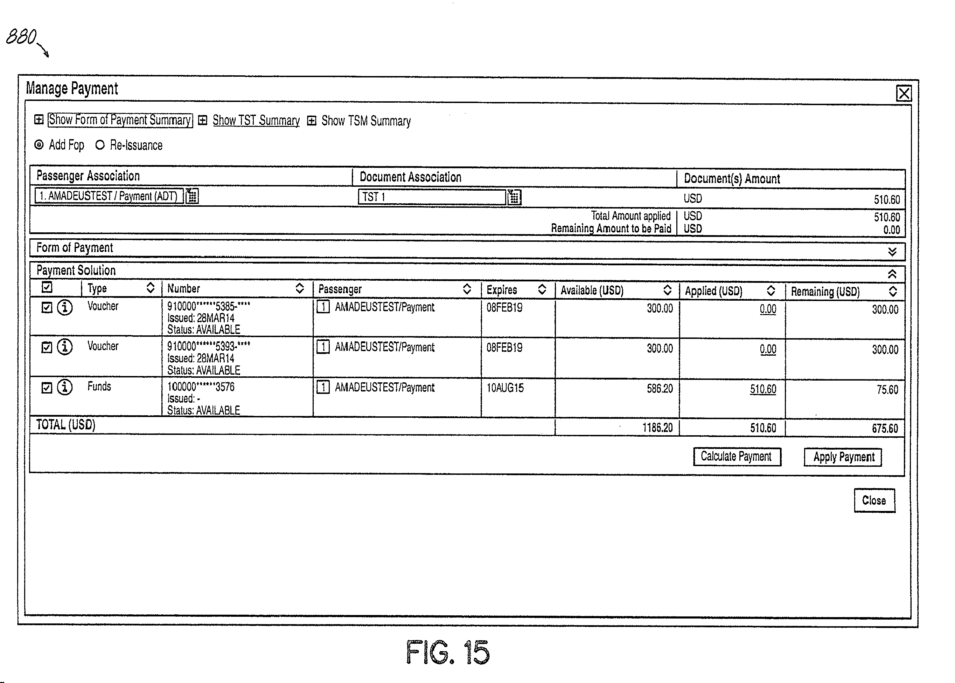

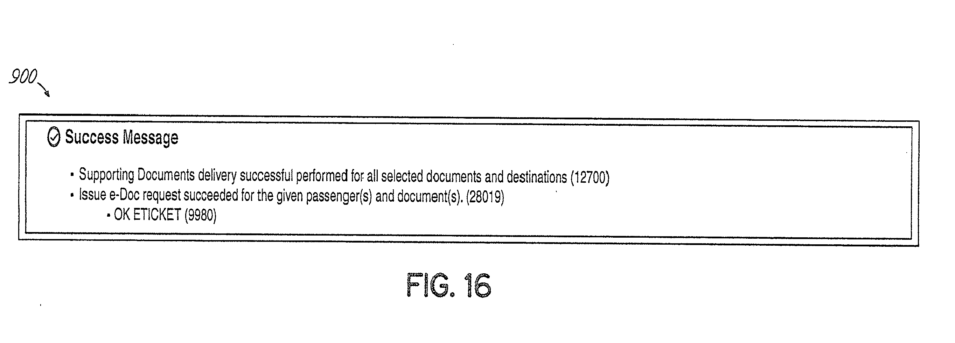

FIGS. 11-16 provide example illustrations of graphical user interfaces 800-920 that may be generated by the reservation system 102 and accessible by a client device such that a user (e.g., a traveler, travel agent, etc.) may input and/or review information associated with a travel solution and/or payment solution via the graphical user interfaces 800-920. In FIG. 11, the graphical user interface 800 displays information associated with a priced travel solution that a user may review. In FIG. 12 provides a graphical user interface 820 that includes input fields where a user may input information for one or more forms of payment. In this example, the graphical user interface 840 includes input fields for a voucher, a gift card, cash, a credit card, and travel funds. FIG. 13 illustrates a graphical user interface 840 in which a user has provided information for a voucher and the reservation system has generated a payment solution for the priced travel solution of FIG. 11 using the provided form of payment information. In this example, the graphical user interface 860 indicates a remaining balance for the priced travel solution. As shown in FIG. 14, a graphical user interface 860 is updated in response to input of an additional form of payment as compared to the output of the graphical user interface 840 of FIG. 13. As shown, the payment solution and remaining balance are updated. FIG. 15 illustrates a graphical user interface 880 that has been further updated in response to input of an additional form of payment as compared to the output of FIG. 14. As shown, the payment solution and remaining balance are updated. FIG. 16 provides a graphical user interface 900 that displays a payment confirmation for the priced travel solution once the payment solution is confirmed.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications/modules described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for generating a payment solution, the method comprising:
receiving a request to generate a payment solution for a priced travel solution using a plurality of forms of payment;
with at least one processor, and in response to receiving the request:
allocating a payment amount to each of the plurality of forms of payment based at least in part on a payment hierarchy that defines an order in which the plurality of forms of payment are to be used for payment of the priced travel solution and at least one payment constraint associated with at least one of the plurality of forms of payment; and
generating the payment solution based on the allocated payment amounts.

2. The method of claim 1, wherein the allocated payment amounts are optimized allocated payment amounts, and allocating the payment amount to each of the plurality of forms of payment comprises:
determining a candidate allocation of payment amounts based at least in part on the payment hierarchy and the at least one payment constraint to allocate an initial payment amount to each of the plurality of forms of payment; and
optimizing the candidate allocation of payment amounts by adjusting at least one initial payment amount based on the payment hierarchy and the at least one payment constraint to thereby determine the optimized allocated payment amounts.

3. The method of any of the preceding claims, wherein optimizing the candidate allocation of payment amounts by adjusting at least one initial payment amount based on the payment hierarchy and the at least one payment constraint to thereby determine the optimized allocated payment amounts comprises:
removing a first initial payment amount allocated to a first form of payment; and
reallocating the first initial payment amount to a second form of payment based at least in part the at least one payment constraint.

4. The method of any of the preceding claims, wherein allocating the payment amount to each of the plurality of forms of payment comprises:
reallocating the payment amounts to the plurality of forms of payment in response to receiving information identifying an additional form of payment based at least in part on the payment hierarchy and the at least one payment constraint.

5. The method of any of the preceding claims, wherein the at least one payment constraint constrains a type of form of payment that may be used to pay for a type of cost associated with the priced travel solution.

6. The method of any of the preceding claims, wherein the payment constraint constrains a first type of form of payment from being used in combination with a second type of form of payment to pay for a cost of a travel inventory item included in the priced travel solution.

7. The method of any of the preceding claims, wherein the payment constraint constrains a time period in which at least one form of payment can be used to pay for a cost associated with the priced travel solution.

8. The method of any of the preceding claims, further comprising:
prior to allocating the payment amount to each of the plurality of forms of payment, determining whether each form of payment is valid,
wherein allocating the payment amount to each of the plurality of forms of payment is based on whether each form of payment is valid.

9. The method of any of the preceding claims, wherein the priced travel solution comprises a first travel inventory item having a first cost amount and a second travel inventory item having a second cost amount, the plurality of forms of payment comprises a first form of payment and a second form of payment, the first form of payment has a fixed credit balance, the payment hierarchy defines the first form of payment as having a superior payment priority to the second form of payment, and allocating the payment amount to each of the plurality of forms of payment comprises:
allocating the payment amount for the first form of payment such that the fixed credit balance is used and allocating the payment amount for the second form of payment to cover a remaining cost for the priced travel solution based at least in part on the first form of payment having the superior payment priority to the second form of payment.

10. The method of any of the preceding claims, wherein each form of payment is associated with a type of form of payment, the order of the payment hierarchy is based on the type of payment, and the type of each form of payment comprises a gift card, a refund voucher, a promotional voucher, or any combination thereof.

11. The method of any of the preceding claims, wherein the allocated payment amount for at least one form of payment is zero.

12. The method of any of the preceding claims further comprising:
returning a response to the request based on the payment solution that includes allocated payment amounts for at least a subset of the forms of payment.

13. The method of any of the preceding claims, wherein the at least one payment constraint comprises a payment constraint associated with travel industry standards, a payment constraint associated with at least one travel inventory item included in the priced travel solution, a payment constraint associated with a travel merchant associated with the at least one travel inventory item, a payment constraint associated with a type of at least one of the plurality of forms of payment, or any combination thereof.

14. An apparatus comprising:
at least one processor; and
program code configured upon execution by the at least one processor to perform the method of any of claims 1-13.

15. A computer program product comprising:
a computer readable storage medium; and
program code stored on the computer readable storage medium and configured upon execution by the at least one processor to perform the method of any of claims 1-13.
